# EUROPÄISCHE PATENTANMELDUNG

(11) **EP 4 763 693 A1**
(43) Veröffentlichungstag der Anmeldung: **24.06.2026**
(21) Anmeldenummer: 25223920.7
(22) Anmeldetag: 16.12.2025
(51) Int. Cl.: B64C 1/22, B64D 9/00, F16B 21/09

(54) **SCHNELLANSCHLUSSSYSTEM, FLUGZEUGFRACHTRAUM, FLUGZEUG UND VERFAHREN ZUR UMKONFIGURIERUNG EINES FLUGZEUGFRACHTRAUMS**

(30) Priorität: 19.12.2024 DE 102024138939
(71) Anmelder: Telair International GmbH, 83714 Miesbach (DE)
(72) Erfinder: Holzner, Richard, 83071 Stephanskirchen (DE)
(74) Vertreter: Meissner Bolte Partnerschaft mbB

(57) **Zusammenfassung**

Die Erfindung betrifft ein Schnellanschlusssystem (10) zum Befestigen und/oder Wechseln von Komponenten, insbesondere Frachtsystemkomponenten (101) und/oder Abdeckungen (102), eines Flugzeugfrachtraums (100) an wenigstens einem Strukturteil (103) einer Flugzeugstruktur (104), umfassend:
- wenigstens einen an dem Strukturteil (103) montierbaren Befestigungszapfen (11) mit einer Zapfenlängsachse (LA);
- wenigstens einen Verbindungsbereich (12), der an der Komponente angeordnet oder ausgebildet ist und wenigstens eine Durchgangsöffnung (13) aufweist, in der der Befestigungszapfen (11) unter Bildung eines ersten Formschlusses in Zapfenlängsachsrichtung und/oder quer zur Zapfenlängsachse zumindest abschnittsweise aufnehmbar oder aufgenommen ist; und
- wenigstens einen an der Komponente angeordneten Verriegelungsmechanismus (14) mit wenigstens einem Eingriffselement (15), das an der Komponente derart beweglich gelagert ist, dass durch eine Translations- oder Rotationsbewegung des Eingriffselements (15) mit dem Befestigungszapfen (11), dem Strukturteil (103) oder einem an dem Strukturteil (103) montierbaren Gegenstück (16) einen zweiten Formschluss bildbar oder gebildet ist, der eine Bewegung der Komponente in Zapfenlängsachsrichtung und/oder quer zur Zapfenlängsachse blockiert.

## Beschreibung

Die Erfindung betrifft ein Schnellanschlusssystem, einen Frachtraum für ein Flugzeug, ein Flugzeug mit einem solchen Frachtraum und ein Verfahren zur Umkonfigurierung eines solchen Frachtraums.

Es ist bekannt, dass Frachträume von Flugzeugen für unterschiedliche Verwendungszwecke häufig umgebaut werden. Insbesondere gibt es für Passagierflugzeuge die Herausforderung, abhängig von den angeflogenen Flughäfen und deren Infrastruktur, z.B. nur Bulk (lose Gepäckstücke) oder nur Container zu beladen. In diesem Zusammenhang ist eine schnelle Umrüstbarkeit zwischen einem flachen Ladeboden und einem Frachtladesystem für Container hilfreich, um ein effektives Be- und Entladen zu gewährleisten.

Zum Halten und Führen derartiger Frachtstücke werden auf dem Frachtdeck montierte Seitenführungen verwendet, die in Längsrichtung des Frachtdecks im Bereich jeweils einer Seitenwand des Flugzeugs verlaufen. Um die Frachtstücke in Längsrichtung des Frachtdecks, bspw. bei einem Belade- oder Entladevorgang, schnell und einfach zu bewegen, kommen häufig Rollenbahnen mit in bestimmten Abständen nacheinander angeordneten, drehbaren Rollen zum Einsatz. Derartige Rollenbahnen können PDUs, sogenannte "Power Drive Units", Riegel etc. umfassen. Ein Frachtdeck kann des Weiteren eine Vielzahl weiterer Frachtsystemkomponenten aufweisen.

Für die optimale Ausnutzung eines Frachtdecks ist es notwendig, eine Vielzahl von Konfigurationsmöglichkeiten anzubieten, wobei ein schnelles Umkonfigurieren eines Decks, bspw. Fracht- oder Hauptdecks, eine hohe Priorität genießt. Aus dem Stand der Technik ist bekannt, dass zum Umkonfigurieren typischerweise vorhandene Sitzschienen bzw. Fittinge zur Verbindung genutzt werden. Herkömmlicherweise umfassen solche Fittinge ein integriertes Sitzschienenprofil, das an dem Strukturteil der Flugzeugstruktur montiert ist. Die im Rahmen der Umkonfigurierung zu montierenden bzw. zu wechselnden Komponenten weisen passende Einsätze zur Verriegelung von den Fittingen auf. Derartige Fittinge haben den Nachteil, dass eine zusätzliche Bauhöhe von mindestens 10 bis 12 mm benötigt wird.

Für Frachtsystemkomponenten ist ausgehend von der Flugzeugstruktur meist eine vorbestimmte Höhe einzuhalten. Diese kann bspw. auf 2 Zoll, d.h. 50,8 mm beschränkt sein. Das bedeutet, dass mit dem aus dem Stand der Technik bekannten System für die Frachtsystemkomponenten im Bereich der Anbindung an die Flugzeugstruktur nur noch etwa 40 mm verbleiben. Abzüglich des benötigten Freiraumes fester Komponenten zur Systemhöhe von etwa 5 mm bleiben effektiv noch 35 mm übrig. In der Konsequenz müssen die Frachtsystemkomponenten flacher ausgelegt werden, was mit Erhöhung des Gewichts verbunden ist, um die auftretenden Biegelasten weiter aufnehmen zu können. Im Falle von Rollenbahnen kann es notwendig sein, die Rollenbahnprofile als komplexe und somit teure Komponenten aus einem Vollmaterial zu fräsen.

Ein weiterer Nachteil bei der Verwendung von Sitzschienen bzw. Fittingen zur Befestigung von Frachtsystemkomponenten resultiert in der Verwendung von zusätzlichen lastübertragenden Befestigungsmitteln, da bspw. Sitzschienen für die Aufnahme und Übertragung von durch Frachtstücke eingeleiteten Kräften nicht in allen Fällen ausgelegt sind.

Der Erfindung liegt daher die Aufgabe zu Grunde, ein Schnellanschlusssystem zum Befestigen bzw. Wechseln von Komponenten eines Flugzeugfrachtraums an wenigstens einem Strukturteil einer Flugzeugstruktur anzugeben, das ein verringertes Gewicht und einen reduzierten Bauraumbedarf aufweist, eine möglichst effiziente Kraftableitung von auftretenden Lasten sowie eine einfache und schnelle Umkonfigurierung des Flugzeugfrachtraums ermöglicht. Der Erfindung liegt ferner die Aufgabe zu Grunde, einen Frachtraum für ein Flugzeug, ein Flugzeug mit einem solchen Frachtraum und ein Verfahren zur Umkonfigurierung solchen Frachtraums anzugeben.

Erfindungsgemäß wird diese Aufgabe im Hinblick auf das Schnellanschlusssystem durch den Gegenstand des Anspruchs 1 gelöst. Hinsichtlich des Frachtraums für ein Flugzeug, des Flugzeugs und des Verfahrens wird diese Aufgabe jeweils durch den Gegenstand des Anspruchs 22 (Frachtraum), des Anspruchs 23 (Flugzeug) und der Ansprüche 24 und 25 (Verfahren) gelöst.

Konkret wird die vorgenannte Aufgabe durch ein Schnellanschlusssystem zum Befestigen und/oder Wechseln von Komponenten, insbesondere Frachtsystemkomponenten und/oder Abdeckungen, eines Flugzeugfrachtraums an wenigstens einem Strukturteil einer Flugzeugstruktur gelöst, wobei das Schnellanschlusssystem Folgendes umfasst:
- wenigstens einen an dem Strukturteil montierbaren Befestigungszapfen mit einer Zapfenlängsachse;
- wenigstens einen Verbindungsbereich, der an der Komponente angeordnet oder ausgebildet ist und wenigstens eine Durchgangsöffnung aufweist, in der der Befestigungszapfen unter Bildung eines ersten Formschlusses in Zapfenlängsachsrichtung und/oder quer zur Zapfenlängsachse zumindest abschnittsweise aufnehmbar oder aufgenommen ist; und
- wenigstens einen an der Komponente angeordneten Verriegelungsmechanismus mit wenigstens einem Eingriffselement, das an der Komponente derart beweglich gelagert ist, dass durch eine Translations- oder Rotationsbewegung des Eingriffselements mit dem Befestigungszapfen, dem Strukturteil oder einem an dem Strukturteil montierbaren Gegenstück ein zweiter Formschluss bildbar oder gebildet ist, der eine Bewegung der Komponente in Zapfenlängsachsrichtung und/oder quer zur Zapfenlängsachse blockiert.

Ein wesentlicher Gedanke der Erfindung ist es also, durch zwei unabhängig voneinander gebildete Formschlussverbindungen die Komponente an dem Strukturteil der Flugzeugstruktur schnell und einfach zu befestigen. Der erste Formschluss erfolgt dabei zwischen dem Verbindungsbereich, der bspw. integraler Bestandteil der Komponente oder als separates Bauteil mit der Komponente fest verbunden ist, und dem wenigstens einen Befestigungszapfen. Der zweite Formschluss erfolgt zwischen dem Eingriffselement des Verriegelungsmechanismus, der an der Komponente angeordnet ist, und dem Befestigungszapfen bzw. dem Strukturteil selbst oder einem auf dem Strukturteil befestigbaren Gegenstück. Das Eingriffselement kann an einem separaten Halteteil, insbesondere Haltesteg, der Komponente, insbesondere translatorisch verschiebbar, gelagert sein. Alternativ kann das Eingriffselement an dem Verbindungsbereich der Komponente, insbesondere rotatorisch, gelagert sein.

Das Schnellanschlusssystem stellt durch Funktionstrennung eine vereinfachte Handhabung der Komponente beim Befestigen und Wechseln an dem Befestigungszapfen bereit.

Beim Befestigen wird der Verbindungsbereich der Komponente durch Aufnahme des Befestigungszapfens in der Durchgangsöffnung in seiner Position ausgerichtet. Dabei wird der erste Formschluss zwischen dem Verbindungsbereich und dem Befestigungszapfen gebildet. Der Befestigungszapfen wird nach einer ersten (bevorzugten) Variante des Schnellanschlusssystems einerseits derart in der Durchgangsöffnung formschlüssig angeordnet, dass ein Formschluss in Zapfenlängsachsrichtung, insbesondere einer Z-Richtung, und in einer ersten von zwei Querrichtungen, insbesondere einer X-Richtung, die quer zur Zapfenlängsachsrichtung verlaufen, gebildet wird. Diese formschlüssige Verbindung entspricht hier dem ersten Formschluss. In der zweiten der zwei Querrichtungen, insbesondere der Y-Richtung, ist der Verbindungsbereich und somit die Komponente in diesem Zustand (noch) bewegbar, insbesondere verschiebbar.

Um bei der ersten Variante des Schnellanschlusssystems eine Bewegung der Komponente in der zweiten von zwei Querrichtungen, insbesondere in Y-Richtung, zu blockieren, wirkt das Eingriffselement des Verriegelungsmechanismus mit dem Strukturteil direkt oder über das an dem Strukturteil montierten Gegenstück indirekt zusammen. Das Eingriffselement greift dabei derart in das Strukturteil oder das Gegenstück ein, dass ein Verschieben der Komponente in der zweiten Querrichtung unterbunden ist. Diese formschlüssige Verbindung entspricht hier dem zweiten Formschluss. Der Eingriff des Eingriffselements in das Strukturteil oder das Gegenstück erfolgt vorzugsweise translatorisch, d.h. durch eine lineare Verschiebung des Eingriffselements.

Ist der erste und der zweite Formschluss gebildet, so ist die Komponente an dem Strukturteil verriegelt und somit positionsfest angeordnet. In diesem Zustand sind alle, insbesondere sechs, Freiheitsgrade der Komponente eingeschränkt.

Um die Komponente von dem Strukturteil zu lösen, wird zuerst der zweite Formschluss gelöst, in dem das Eingriffselement in die entgegengesetzte Richtung verschoben wird. Anschließend kann der Verbindungsbereich in Bezug auf den Befestigungszapfen in der zweiten Querrichtung derart relativverschoben werden, dass der Befestigungszapfen außer Eingriff bringbar ist. In diesem Zustand kann der Verbindungsbereich von dem Befestigungszapfen derart abgehoben werden, dass dieser aus der Durchgangsöffnung führbar ist. In diesem Zustand sind der erste und zweite Formschluss aufgehoben, sodass die Komponente frei beweglich und ein Komponentenwechsel möglich ist.

Nach einer zweiten (weiteren) Variante des Schnellanschlusssystems wird der Befestigungszapfen derart in der Durchgangsöffnung formschlüssig angeordnet, dass ein Formschluss in beide Querrichtungen, insbesondere einer X-Richtung und Y-Richtung, die quer zur Zapfenlängsachsrichtung verlaufen, gebildet wird. Diese formschlüssige Verbindung entspricht hier dem ersten Formschluss. In der Zapfenlängsachsrichtung, insbesondere der Z-Richtung, ist der Verbindungsbereich und somit die Komponente in diesem Zustand bewegbar, insbesondere verschiebbar.

Um bei der zweiten Variante des Schnellanschlusssystems eine Bewegung der Komponente in der Zapfenlängsachsrichtung, insbesondere in Z-Richtung, zu blockieren, wirkt das Eingriffselement des Verriegelungsmechanismus mit dem Befestigungszapfen, vorzugsweise direkt, zusammen. Das Eingriffselement nimmt dabei den Befestigungszapfen, insbesondere quer zur Zapfenlängsachse, derart auf, dass ein Verschieben der Komponente in der Zapfenlängsachsrichtung unterbunden ist. Diese formschlüssige Verbindung entspricht hier dem zweiten Formschluss. Der Eingriff des Eingriffselements in das Strukturteil oder das Gegenstück erfolgt vorzugsweise rotatorisch, d.h. durch Drehbewegung des Eingriffselements.

Ist so der erste und der zweite Formschluss gebildet, so ist die Komponente an dem Strukturteil verriegelt und somit positionsfest angeordnet. In diesem Zustand sind alle, insbesondere sechs, Freiheitsgrade der Komponente eingeschränkt.

Um die Komponente von dem Befestigungszapfen zu lösen, wird zuerst der zweite Formschluss gelöst, in dem das Eingriffselement in die entgegengesetzte Richtung gedreht wird. Anschließend kann der Verbindungsbereich in Bezug auf den Befestigungszapfen in Zapfenlängsrichtung derart relativverschoben werden, dass der Befestigungszapfen außer Eingriff gebracht wird. In diesem Zustand kann der Verbindungsbereich von dem Befestigungszapfen derart abgehoben werden, dass dieser aus der Durchgangsöffnung des Verbindungsbereichs führbar ist. In diesem Zustand sind der erste und zweite Formschluss aufgehoben, sodass die Komponente frei beweglich ist.

Der Befestigungszapfen ist mit dem Strukturteil der Flugzeugstruktur verbindbar ausgebildet. Das Strukturteil weist herkömmlicherweise vorbestimmte Befestigungsbereiche auf. Diese Befestigungsbereiche umfassen vorzugsweise eine Vielzahl von Durchgangsöffnungen, die bspw. als Bohrungen ausgebildet sind. Die Durchgangsöffnungen bilden Anbindungspunkte für den Befestigungszapfen. Der Befestigungszapfen wird bei der Montage an einem Anbindungspunkt befestigt und vorzugsweise direkt mit dem Strukturteil verbunden. Dies kann durch eine Schraubverbindung, bei der der Befestigungszapfen direkt in das Strukturteil eingeschraubt wird, oder durch eine Schrauben-Mutter-Verbindung erfolgen. Andere Befestigungsarten zur Verbindung des Befestigungszapfens mit dem Strukturteil sind möglich. Der Befestigungszapfen, bevorzugt mehrere des Befestigungszapfens, ist/sind vorzugsweise direkt an den an dem Strukturteil vorhandenen Anschraubpunkten montiert, die typischerweise für die Befestigung von fest installierten Frachtsystemkomponenten vorgesehen sind.

Besonders bevorzugt umfasst das Schnellanschlusssystem mehrere der Befestigungszapfen, die jeweils an einem der Anbindungspunkte mit dem Strukturteil verbunden sind.

Die Montage des Befestigungszapfens an dem Strukturteil hat den Vorteil, dass die an der Komponente auftretenden Lasten, bspw. bei einem Be- und Entladevorgang oder bei der Ladungssicherung, verbessert, bzw. vorzugsweise direkt in die Flugzeugstruktur ableitbar sind. Im Gegensatz zum Stand der Technik kann bei der Erfindung die Verwendung von zusätzlichen lastübertragenden Befestigungsmitteln zur Entlastung von Sitzschienen bzw. Fittingen entfallen.

Des Weiteren hat die (direkte) Verbindung des Befestigungszapfens an dem Strukturteil den Vorteil, dass eine Bauhöhe des Gesamtsystems nicht oder nur geringfügig reduziert ist, da die Komponente vertieft im Frachtraumboden sitzt, bzw. die komponentenseitige Befestigung integraler Teil der Komponente ist und keine zusätzliche Höhe oder Bauraum für einen typischen Montagefitting erforderlich ist. Dies ermöglicht es standardisierte Komponenten zu verwenden. Insbesondere bei der Befestigung von Rollenbahnen an dem Strukturteil ist von Vorteil, dass diese mehr Bauhöhe zur Verfügung haben und somit gewichtsreduziert bei optimaler Stabilität sind.

Der Verbindungsbereich ist vorzugsweise ein Element mit einer Auflagefläche zur flächigen Auflage auf dem Strukturteil oder eine Auflageplatte, die im montierten Zustand zwischen der Auflagefläche und dem Strukturteil angeordnet ist. Der Verbindungsbereich bildet vorzugsweise einen Flansch an der Komponente, der an einer in Einbaulage untenliegenden Seite der Komponente ausgebildet ist. Der Flansch steht bevorzugt seitlich von der Komponente ab, sodass ein flügelartiger Verbindungsbereich gebildet ist. Dies ist vorzugsweise bei der Ausbildung der Komponente als Rollenbahn der Fall, wobei der Flansch von einem Rollenbahnprofil seitlich absteht.

Alternativ kann der Verbindungsbereich auf einer Unterseite der Komponente als Auflagefläche gebildet sein. Bspw. kann dies bei der Ausbildung der Komponente als Abdeckung bzw. Deckplatte der Fall sein.

Mit dem erfindungsgemäßen Schnellanschlusssystem wird somit eine Lösung bereitgestellt, die eine schnelle und einfache Umkonfigurierung bzw. Umrüstung eines Frachtraums bzw. Frachtdecks ermöglicht. Bspw. ist durch das Schnellanschlusssystem ein Wechsel von einem Frachtraum mit flachem Boden ("Bulk-Konfiguration) auf einen Frachtraum mit Frachtladesystem und umgekehrt realisierbar. Möglich ist, dass das Schnellanschlusssystem neben dem Frachtdeck auch im Hauptdeck zur Anwendung kommen kann, wenn bspw. eine Umkonfigurierung des Hauptdecks von Personentransport auf Frachttransport realisiert werden soll. Das Schnellanschlusssystem ist somit vielseitig einsetzbar.

Im Rahmen der Erfindung ist unter dem Blockieren in einer von zwei Querrichtungen ein Blockieren der Komponente in beide X-Richtungen oder beide Y-Richtungen zu verstehen. Ferner ist unter dem Blockieren in beide Querrichtungen ein Blockieren der Komponente in beide X-Richtungen und beide Y-Richtungen zu verstehen. Ein Blockieren der Bewegung der Komponente in Zapfenlängsachsrichtung betrifft eine von zwei Z-Richtungen, da die Komponente über den Verbindungsbereich im eingebauten Zustand auf einem Strukturteil direkt oder indirekt aufliegt und somit ein Blockieren nach unten, insbesondere die weitere der zwei Z-Richtungen, über die Flugzeugstruktur erfolgt.

Üblicherweise verwendet man ein kartesisches Koordinatensystem, um innerhalb eines Flugzeugs einzelne Richtungsangaben bereitzustellen. Hierbei erstreckt sich die X-Achse vom Heck zum Bug, die Y-Achse verläuft quer zur X-Achse und liegt im Wesentlichen in der von den Flügeln aufgespannten Ebene. Die Z-Achse steht senkrecht auf der X- und Y-Achse. Die Zapfenlängsachse ist vorzugsweise parallel zur Z-Achse. Somit verläuft die Z-Richtung vorzugsweise parallel zur Z-Achse. Die X-Richtung verläuft bspw. parallel zur X-Achse und die Y-Richtung parallel zur Y-Achse. Wesentlich bei der Richtungsangabe betreffend den ersten und zweiten Formschluss ist, dass die Zapfenlängsachsrichtung senkrecht zur X- und Y-Richtung verläuft. Die X- und Y-Richtung verläuft in einer Ebene, die senkrecht zur Zapfenlängsachse steht. Diese müssen nicht zwingend parallel zur X- und Y-Achse des Flugzeugs verlaufen.

Bevorzugte Ausführungsformen der Erfindung sind in den Unteransprüchen angegeben.

Bei einer besonders bevorzugten Ausführungsform weist der Befestigungszapfen einen länglichen Grundkörper mit wenigstens einem Halteabschnitt auf, der quer zur Zapfenlängsachse an dem Grundkörper absteht, um den ersten Formschluss mit dem Verbindungsbereich zu bilden oder den zweiten Formschluss mit dem Eingriffselement zu bilden. Mit anderen Worten bildet der Halteabschnitt an dem Grundkörper einen Überstand, der es ermöglicht, durch Zusammenwirken mit dem Verbindungsbereich der Komponente einen Formschluss in Zapfenlängsachsrichtung, insbesondere Z-Richtung, zu bilden. Oder anders gesagt, hält der Halteabschnitt den Verbindungsbereich in Zapfenlängsachsrichtung, wenn der erste Formschluss gebildet ist. Ein Abheben der Komponente wird dadurch verhindert. Zusätzlich kann der Halteabschnitt einen Formschluss mit dem Eingriffselement in Zapfenlängsachsrichtung bilden. Hier hält der Halteabschnitt das Eingriffselement in Zapfenlängsachsrichtung, wenn der zweite Formschluss gebildet ist, das wiederum vorzugsweise den Verbindungsbereich in Zapfenlängsachsrichtung auf Position hält. Der Halteabschnitt ist somit vielseitig verwendbar, um einen Formschluss zu bilden.

Insbesondere ist der Befestigungszapfen in seiner Form sehr einfach aufgebaut, sodass dieser mit geringen Kosten herstellbar ist.

Der Halteabschnitt ist vorzugsweise an einem Längsende des Grundkörpers ausgebildet, das im an dem Strukturteil montierten Zustand auf der dem Frachtraum zugewandten Seite angeordnet ist.

Vorzugsweise umfasst der Halteabschnitt des Befestigungszapfens wenigstens einen Kragen, der in Bezug auf die Zapfenlängsachse zumindest teilweise umlaufend ausgebildet ist. Besonders bevorzugt ist der Kragen an dem Grundkörper vollständig umlaufend ausgebildet. Dies hat den Vorteil, dass eine möglichst große Auflagefläche zur Bildung eines Formschlusses, insbesondere des ersten oder zweiten Formschlusses, in Zapfenlängsachsrichtung bereitgestellt ist, was die Stabilität der Formschlussverbindung erhöht. Des Weiteren ist dadurch ein Ableiten von lastbedingten Kräften über den Befestigungszapfen in das Strukturteil möglich.

Weiter vorzugsweise umfasst der Grundkörper einen an den Halteabschnitt angrenzenden, insbesondere in Zapfenlängsachsrichtung darunterliegenden, Führungsabschnitt, der eine geringere Breite als der Halteabschnitt aufweist. Der Führungsabschnitt geringerer Breite ermöglicht einerseits die Bildung des ersten Formschlusses durch entsprechende Ausbildung der Durchgangsöffnung des Verbindungsbereichs und andererseits ein Eingreifen des Eingriffselements durch eine Drehbewegung. Der Grundkörper ist vorzugsweise pilzförmig ausgebildet. Der Halteabschnitt und der Führungsabschnitt weisen bevorzugt jeweils einen Außendurchmesser auf, wobei der Außendurchmesser des Halteabschnitts größer als der Außendurchmesser des Führungsabschnitts ist. Vorteilhafterweise ist die Durchgangsöffnung des Verbindungsbereichs dazu angepasst, den Halteabschnitt und/oder zumindest einen Teilbereich des Grundkörpers unter Bildung des ersten Formschlusses aufzunehmen.

Bevorzugt ist der Befestigungszapfen 11 oder sind mehrere des Befestigungszapfens 11 im montierten Zustand direkt mit oder an dem Strukturteil 103 durch Schrauben befestigt. Der oder die Befestigungszapfen 11 können durch wenigstens eine Schraube mit oder an dem Strukturteil verschraubt sein. Die Schraube kann eine Senkkopfschraube sein.

Bei einer besonders bevorzugten Ausführungsform weist die Durchgangsöffnung des Verbindungsbereichs einen ersten Öffnungsbereich und einen angrenzenden zweiten Öffnungsbereich auf, die ineinander übergehen, wobei der erste Öffnungsbereich so ausgebildet ist, dass der Halteabschnitt des Befestigungszapfens hindurchführbar ist und der zweite Öffnungsbereich so ausgebildet ist, dass der Halteabschnitt im aufgenommenen Zustand den zweiten Öffnungsbereich nach außen hin überragt. Mit anderen Worten weist der zweite Öffnungsbereich einen kleineren Öffnungsquerschnitt auf als der erste Öffnungsquerschnitt. Oder anders gesagt, ist der zweite Öffnungsbereich enger als der erste Öffnungsbereich ausgebildet. Die Durchgangsöffnung ist also vorzugsweise schlüssellochförmig ausgebildet.

Es ist besonders von Vorteil, wenn der erste Öffnungsbereich eine Innenkontur, insbesondere einen Innendurchmesser, umfasst, die im Wesentlichen größer als eine Außenkontur, insbesondere der Außendurchmesser, des Halteabschnitts des Befestigungszapfens ist und der zweite Öffnungsbereich eine Innenkontur aufweist, die kleiner als die Außenkontur des Halteabschnitts, insbesondere größer oder im Wesentlichen gleich einer Außenkontur, insbesondere eines Außendurchmessers, des Führungsabschnitts, ist. Dies ermöglicht ein Halten des Verbindungsbereichs an dem Strukturteil, da der Halteabschnitt den an den zweiten Öffnungsbereich angrenzenden Verbindungsbereich überdeckt und so einen Formschluss in Zapfenlängsachsrichtung bildet. Zusätzlich begrenzt der zweite Öffnungsbereich den Führungsabschnitt in der ersten Querrichtung, insbesondere X-Richtung, sodass der erste Formschluss gebildet ist.

Der Einsitzabschnitt grenzt an den Führungsabschnitt an und steht vorzugsweise quer zur Zapfenlängsachse über den Führungsabschnitt zumindest teilweise über. Der Einsitzabschnitt kann als weiterer Kragen des Grundkörpers ausgebildet sein, der den Grundkörper bezogen auf die Zapfenlängsachse zumindest abschnittsweise, insbesondere vollständig, umläuft. Der Einsitzabschnitt kann eine Halte- und Zentrierfunktion für die Zapfenmontage erfüllen. Der Führungsabschnitt kann zwischen dem Halteabschnitt und dem Einsitzabschnitt eine umlaufende Nut in dem Grundkörper bilden.

Alternativ kann die Durchgangsöffnung des Verbindungsbereichs langlochförmig ausgebildet sein. Es ist möglich, dass die Durchgangsöffnung ein vollständig geschlossenes Langloch ist. Alternativ kann die Durchgangsöffnung ein einseitig offenes Langloch sein, sodass der Befestigungszapfen durch seitliches Aufschieben in der Durchgangsöffnung aufschiebbar ist. Die Durchgangsöffnung kann in diesem Fall so ausgebildet sein, dass der Halteabschnitt im aufgenommenen Zustand des Befestigungszapfens den an die Durchgangsöffnung angrenzenden Verbindungsbereich überdeckt und somit den Verbindungsbereich in Zapfenlängsachsrichtung hält. Zusätzlich ist die Durchgangsöffnung hier so ausgebildet, dass sie den Befestigungszapfen, insbesondere den Führungsabschnitt in der ersten Querrichtung, insbesondere in X-Richtung, begrenzt.

Bei einer bevorzugten Ausführungsform ist das Eingriffselement dazu angepasst, in eine Öffnung des Strukturteils und/oder eines an dem Strukturteil montierbaren Gegenstücks unter Bildung des zweiten Formschlusses einzugreifen. Ist der erste Formschluss hergestellt, ist der Verbindungsbereich und somit die Komponente in ihrer Endposition ausgerichtet. In der Endposition liegt die Öffnung des Strukturteils bzw. des Gegenstücks dem Eingriffselement derart gegenüber, dass das Eingriffselement, vorzugsweise durch eine Translationsbewegung, eingreifen kann. Alternativ oder zusätzlich kann das Eingriffselement durch eine Dreh- oder Schwenkbewegung in die Öffnung eingreifen. Um diese Endposition der Komponente zu verriegeln, wird der zweite Formschluss hergestellt, indem das Eingriffselement so bewegt wird, dass es in die Öffnung einragt. Bspw. wird durch den Eingriff des Eingriffselements in die Öffnung ein Bewegen der Komponente in der zweiten Querrichtung, insbesondere Y-Richtung, blockiert. Dies entspricht einem verriegelten und befestigten Zustand der Komponente an dem Strukturteil der Flugzeugstruktur, und zwar, in ihrer Endposition. Durch das Vorsehen einer einfachen Öffnung in dem Strukturteil bzw. dem Gegenstück wird eine besonders stabile Formschlussverbindung realisiert.

Besonders bevorzugt ist das Eingriffselement bolzenförmig ausgebildet und in einem Halteteil der Komponente translatorisch verschiebbar geführt. Das Eingriffselement ist vorzugsweise zylindrisch ausgebildet. Die Öffnung des Strukturteils oder des Gegenstücks kann zylindrisch sein. Die Öffnung und das Eingriffselement korrespondieren in der Endposition der Komponente.

Das Eingriffselement kann ein in oder an der Komponente längsverschiebbarer Pin sein. Das Halteteil kann zwischen zwei Rollenbahnprofilen verlaufen, wobei in diesem Fall die Komponente eine Rollenbahn ist. Das bolzenförmige Eingriffselement ist stabil und kostengünstig herstellbar. Ferner ist ein solch ausgebildeter Verriegelungsmechanismus ausfallssicher, da dieser sehr einfach aufgebaut und robust ist.

Bei einer weiteren bevorzugten Ausführungsform umfasst der Verriegelungsmechanismus einen Hebel, der mit dem Eingriffselement drehbar verbunden ist, wobei der Hebel in einer ersten Hebelstellung das Eingriffselement zur Auflösung des zweiten Formschlusses, insbesondere quer zur Zapfenlängsachsrichtung bzw. in der zweiten Querrichtung, anhebt und in einer zweiten Hebelstellung zur Bildung des zweiten Formschlusses, insbesondere quer zur Zapfenlängsachsrichtung bzw. in der zweiten Querrichtung, absenkt. Der Hebel ist vorzugsweise ein Schwenkhebel, der zwischen den beiden Hebelstellungen verschwenkbar ist. Durch den Hebel ist der zweite Formschluss zur Verrieglung der Endposition der Komponente schnell und einfach herstellbar und auch wieder lösbar.

Vorzugsweise ist der Hebel derart ausgebildet, dass dieser in der ersten Hebelstellung selbsthemmend mit dem Halteteil der Komponente zusammenwirkt. Dazu kann der Hebel eine mit dem Halteteil in Kontakt stehende Hebelkontur aufweisen, die in der ersten Hebelstellung flächig mit dem Halteteil zusammenwirkt und in der zweiten Hebelstellung mit dem Halteteil im Wesentlichen in Abrollkontakt, insbesondere in Linienkontakt, steht. In der ersten Hebelstellung ist der Hebel vorzugsweise im Wesentlichen stehend, insbesondere in Z-Richtung verlaufend, angeordnet. In der zweiten Hebelstellung ist der Hebel vorzugsweise im Wesentlichen liegend, insbesondere in einer Richtung quer zur Z-Richtung verlaufend, angeordnet.

Nach einer Ausführungsform weist der Verriegelungsmechanismus einen Drehgriff auf, der mit dem Eingriffselement, insbesondere drehfest, verbunden ist, wobei der Drehgriff in einer ersten Griffstellung das Eingriffselement zur Auflösung des zweiten Formschlusses, insbesondere quer zur Zapfenlängsachsrichtung, anhebt und in einer zweiten Griffstellung zur Bildung des zweiten Formschlusses, insbesondere quer zur Zapfenlängsachsrichtung, absenkt. Der Drehgriff ist vorzugsweise um eine Drehachse drehbar, die mit einer Mittellängsachse des Eingriffselements koaxial ist. Mit anderen Worten weist das Eingriffselement bevorzugt eine Mittellängsachse auf, die insbesondere parallel zur Zapfenlängsachsrichtung verläuft, und um die der Drehgriff drehbar ist. Die Drehachse verläuft vorzugsweise senkrecht, insbesondere vertikal, zur Drehrichtung des Drehgriffs. Durch Drehung des Drehgriffs um die Drehachse ist der Drehgriff bevorzugt zwischen den beiden Griffstellungen verstellbar. Durch den Drehgriff ist der zweite Formschluss zur Verrieglung der Endposition der Komponente schnell und einfach herstellbar und auch wieder lösbar.

In der ersten Griffstellung kann der Drehgriff in Bezug auf das Halteteil um die Drehachse 90 Grad verdreht sein. In der zweiten Griffstellung kann der Drehgriff mit dem Halteteil richtungsübereinstimmend ausgerichtet sein. Mit anderen Worten kann der Drehgriff in der ersten Griffstellung, in der das Eingriffselement angehoben ist, sich in einer 0-Stellung, insbesondere Ausgangsstellung, befinden und in der zweiten Griffstellung, in der das Eingriffselement abgesenkt ist, in einer in Bezug auf die 0-Stellung um 90 Grad gedrehte Stellung befinden. Der Drehwinkelbereich zum Anheben und Absenken des Eingriffselements beträgt vorzugsweise 0 Grad bis 90 Grad (um die Drehachse).

Bevorzugt umfasst der Verriegelungsmechanismus wenigstens einen Fortsatz mit einer, insbesondere in Zapfenlängsachsrichtung, abstehenden Oberkante, der den Drehgriff in seiner ersten Griffstellung angehoben hält, und wenigstens eine von der Oberkante abgesetzte Fläche 56 aufweist, auf der der Drehgriff in seiner zweiten Griffstellung abgesenkt aufliegt. Der Fortsatz und/oder die abgesetzte Fläche 56 sind vorzugsweise Teil des Halteteils. Hier ist von Vorteil, dass durch eine einfache konstruktive Gestaltung ein Festlegen des Drehgriffs in seiner jeweiligen Stellung ermöglicht ist.

Vorzugsweise ist der Drehgriff derart ausgebildet, dass dieser in der ersten Griffstellung mit dem Fortsatz zusammenwirkt, insbesondere unter Wirkung einer Federvorspannung des Drehgriffs gegen die Oberkante des Fortsatzes. Der Drehgriff kann eine mit der Oberkante des Fortsatzes in Kontakt stehende, dem Eingriffselement zugewandte Grifffläche aufweisen, die in der ersten Griffstellung mit der Oberkante zusammenwirkt und in der zweiten Griffstellung auf der abgesetzten Fläche 56 aufliegt.

Vorzugsweise umfasst der Verriegelungsmechanismus wenigstens ein Federelement, das das Eingriffselement, im Falle des Vorliegens des Hebels, in einer von dem Hebel abgewandten Richtung vorspannt, wenn sich der Hebel in seiner ersten Hebelstellung befindet. Das Federelement hat den Vorteil, dass es das Überführen des Hebels von der ersten in die zweite Hebelstellung durch seine Federkraft unterstützt und den zweiten Formschluss mit der Öffnung des Strukturteils bzw. des Gegenstücks sichert. Das Federelement drückt das Eingriffselement in der Eingriffsstellung in die Öffnung. Dadurch ist der zweite Formschluss und somit die Verriegelung der Komponente in ihrer Endposition sichergestellt.

Im Falle des Vorliegens des Drehgriffs, umfasst der Verriegelungsmechanismus vorzugsweise wenigstens ein Federelement, das das Eingriffselement in einer von dem Drehgriff abgewandten Richtung vorspannt, wenn sich der Drehgriff in seiner ersten Griffstellung befindet. Das Federelement hat den Vorteil, dass es den Drehgriff gegen die Oberkante des Fortsatzes vorspannt und somit der Drehgriff an der Oberkante, insbesondere kraftschlüssig, gehalten wird. Des Weiteren bewirkt das Federelement, dass es den zweiten Formschluss in der Öffnung des Strukturteils bzw. des Gegenstücks sicher hält. Das Federelement drückt das Eingriffselement in der Eingriffsstellung in die Öffnung. Dadurch ist der zweite Formschluss und somit die Verriegelung der Komponente in ihrer Endposition sichergestellt.

Das Federelement ist vorzugsweise in das Halteteil integriert und stützt sich gegen diese ab. Das Halteteil bildet vorzugsweise für das Federelement ein Widerlager, um das Eingriffselement in der ersten Hebelstellung bzw. ersten Griffstellung in Richtung der Öffnung des Strukturteils bzw. des Gegenstücks vorzuspannen.

Das Federelement kann wenigstens eine Schraubenfeder umfassen. Es ist alternativ möglich, dass das Federelement wenigstens eine Kegelstumpffeder umfasst. Andere Federtypen als Federelement sind möglich.

Bei einer weiteren Ausführungsform weist der Verriegelungsmechanismus wenigstens eine drehbeweglich gelagerte Kulisse auf, die mit dem Eingriffselement derart gekoppelt ist, dass sie durch eine Drehbewegung ein Anheben oder Absenken des Eingriffselements bewirkt. Das Anheben und Absenken des Eingriffselements wird hierbei durch ein rotatorische Hebelbewegung über die Kulisse realisiert.

Bei einer bevorzugten Ausführungsform weist das Schnellanschlusssystem wenigstens eine Auflageplatte und/oder wenigstens eine Bodenplatte, insbesondere Bodenabdeckung, zur Auflage der Komponente auf, die wenigstens eine Durchgangsöffnung für den Befestigungszapfen umfasst. Die Auflageplatte und/oder Bodenplatte kann als Positionierhilfe für den Befestigungszapfen dienen. Die Auflageplatte und/oder Bodenplatte weist vorzugsweise wenigstens eine vorgefertigte exakte Bohrung auf, in der der Befestigungszapfen eingesetzt wird. Die Auflageplatte und/oder Bodenplatte bietet einerseits Schutz für das Strukturteil, bspw. einen Querträger der Flugzeugstruktur. Zwar reduziert die Auflageplatte und/oder Bodenplatte die verbleibende Systemhöhe geringfügig, bietet jedoch durch die vorgegebene Positionierhilfe für den Befestigungszapfen Vorteile hinsichtlich des Einbaus.

Die Auflageplatte und/oder Bodenplatte weist vorzugsweise mehrere Bohrungen für mehrere der Befestigungszapfen auf. Bevorzugt weist die Auflageplatte bzw. die Bodenplatte wenigstens zwei, wenigstens vier, wenigstens sechs oder wenigstens acht Bohrungen auf. Das Schnellanschlusssystem weist vorzugsweise wenigstens zwei, wenigstens vier, wenigstens sechs oder wenigstens acht der Befestigungszapfen auf. Im Befestigungszustand ist je eine der Bohrungen einem der Befestigungszapfen zugeordnet bzw. ist ein solcher in einer Bohrung angeordnet. Die Bohrungen und damit die Anzahl der Befestigungszapfen sind hierbei im Regelfall von der Flugzeugstruktur vorgegeben oder mit dieser abgestimmt.

Die Auflageplatte und/oder Bodenplatte ist vorzugsweise dünn ausgebildet. Bevorzugt weist die Auflageplatte und/oder Bodenplatte eine Dicke im Bereich der Durchgangsöffnung für den Befestigungszapfen von 1 mm bis 8 mm, insbesondere 1 mm bis 6 mm oder 1 mm bis 4 mm, besonders bevorzugt von 1 mm bis 3 mm auf.

Über die Auflageplatte kann die gewünschte Höhe in Einbaulage des Befestigungszapfens eingestellt werden.

Sollte auf die Auflageplatte verzichtet werden, kann eine exakte Positionierung des Befestigungszapfens bei der Montage mittels Positionierlehre und bei Bedarf durch Verwendung von Ausgleichsscheiben erfolgen. Es ist möglich, dass in diesem Fall die Höheneinstellung des Befestigungszapfens über ein oder mehrere Auflagebleche erfolgt.

Vorzugsweise weist die Durchgangsöffnung der Auflageplatte bzw. der Bodenplatte wenigstens einen Absatz und der Befestigungszapfen wenigstens einen Einsitzabschnitt auf, der auf dem Absatz aufliegt und von der Durchgangsöffnung formschlüssig aufgenommen ist. Mit anderen Worten stützt sich der Befestigungszapfen über den Einsitzabschnitt auf dem Absatz ab, wobei der Einsitzabschnitt in Bezug auf die Zapfenlängsachse durch die Durchgangsöffnung, insbesondere vollständig, umfangsbegrenzt ist. Hier ist von Vorteil, dass eine flächige Krafteinleitung von dem Befestigungszapfen über den Absatz in die Auflageplatte bzw. die Bodenplatte und weiter in das Strukturteil erfolgt. Des Weiteren stützt die Auflageplatte bzw. die Bodenplatte den Einsitzabschnitt seitlich ab, sodass auch Kräfte in X- und Y-Richtung aufgenommen und effizient abgeleitet werden können.

Bei einer bevorzugten Ausführungsform umfasst die Durchgangsöffnung des Verbindungsbereichs eine Innenkontur, insbesondere einen Innendurchmesser, die im Wesentlichen einer Außenkontur, insbesondere einem Außendurchmesser, des Einsitzabschnitts und/oder des Halteabschnitts des Befestigungszapfens entspricht. Dies hat den Vorteil, dass der erste Formschluss in beide Querrichtungen, insbesondere in X- und Y-Richtung, in Bezug auf die Zapfenlängsrichtung erfolgt. Ferner ist der Verbindungsbereich auf den Befestigungszapfen aufsetzbar, um diesen dann im Anschluss an dem Befestigungszapfen zu verriegeln.

Vorzugsweise ist die Innenkontur der Durchgangsöffnung des Verbindungsbereichs zur Außenkontur des Führungsabschnitts komplementär ausgebildet. Zusätzlich oder alternativ kann die Innenkontur der Durchgangsöffnung des Verbindungsbereichs zur Außenkontur des Halteabschnitts komplementär ausgebildet sein. Die Innenkontur der Durchgangsöffnung des Verbindungsbereichs kann ein geringes Übermaß zur Außenkontur des Führungsabschnitts und/oder des Halteabschnitts aufweisen, um die Aufnahme des Befestigungszapfens zu gewährleisten. Bevorzugt ist die Durchgangsöffnung des Verbindungsbereichs kreisförmig ausgebildet.

Besonders bevorzugt ist das Gegenstück zum Eingreifen des Eingriffselements Teil der Auflageplatte. Das Gegenstück kann mit der Auflageplatte integral ausgebildet sein. Mit anderen Worten können das Gegenstück und die Auflageplatte einstückig ausgebildet sein. Dies hat einen sehr stabilen Aufbau zur Folge. Alternativ kann das Gegenstück als separates Bauteil ausgebildet sein, das mit der Auflageplatte fest verbunden ist. Weiter alternativ kann das Gegenstück unabhängig von der Auflageplatte vorgesehen sein, insbesondere an dem Strukturteil oder der Bodenplatte befestigt sein. Vorzugsweise ist das Gegenstück in diesem Fall in der Nähe des wenigstens einen Befestigungszapfens, insbesondere der mehreren Befestigungszapfen, angeordnet. Das Gegenstück dient zur Bildung des zweiten Formschlusses durch Eingriff des Eingriffselements des Verriegelungsmechanismus. Das Gegenstück ist vorzugsweise im Mittelbereich der Auflageplatte angeordnet.

Das Gegenstück weist vorzugsweise eine Haltenase auf, die von einer Unterseite des Gegenstücks versetzt ist und seitlich einen Überstand bildet. Im montierten Zustand der Auflageplatte bzw. des Gegenstücks an dem Strukturteil ist ein Abstand zwischen der Haltenase und dem Strukturteil gebildet, in den ein Eingriffselement einer Komponente, bspw. einer Abdeckung zur lösbaren Verriegelung eingreifen kann.

Sollte auf die Auflageplatte verzichtet werden, kann das Gegenstück als solches auf dem Strukturteil bzw. der Bodenplatte befestigt werden, um ein Eingreifen des Eingriffselements zu realisieren.

Die Auflageplatte bzw. die Bodenplatte kann zusätzlich wenigstens einen Schienenabschnitt, insbesondere Lochschienenabschnitt, zur Bildung eines Verzurrpunktes bzw. Positionierfittings aufweisen, der im Bereich der Öffnung des Gegenstücks angeordnet ist. Der Schienenabschnitt ist vorzugsweise in einem Mittelbereich der Auflageplatte bzw. der Bodenplatte ausgebildet. Dies ermöglicht die Ausbildung von mehreren Durchgangsöffnungen für mehrere Befestigungszapfen auf beiden Seiten des Schienenabschnitts, sodass ein fester, stabiler Anbindungspunkt bereitgestellt wird. Der Schienenabschnitt verläuft vorzugsweise entlang des Strukturteils, d.h. in Y-Richtung. Besonders bevorzugt grenzt der Schienenabschnitt an das Gegenstück an.

Bei einer bevorzugten Ausführungsform sind der Halteabschnitt und/oder der Führungsabschnitt des Befestigungszapfens mit dem Grundkörper des Befestigungszapfens einteilig ausgebildet. Alternativ sind der Halteabschnitt und/oder der Führungsabschnitt des Befestigungszapfens vorzugsweise Teil einer von dem Grundkörper getrennten Hülse. Die mehrteilige Ausführung hat den Vorteil, dass der Befestigungszapfen einfach und kostengünstig herstellbar ist.

Die Hülse kann ein eigenständiges Bauteil sein, die auf dem Grundkörper des Befestigungszapfens anordenbar oder angeordnet ist. Die Hülse kann dann auf den länglichen Grundkörper aufgeschoben werden bzw. sein. Mit anderen Worten kann der längliche Grundkörper in die Hülse eingeführt sein. Alternativ kann die Hülse, im Falle der Ausbildung als eigenständiges Bauteil, auf der Auflageplatte vormontiert sein, wobei die Durchgangsöffnung der Auflageplatte für den länglichen Grundkörper des Befestigungszapfens in einen Durchgang der Hülse verläuft. Hier wird der Befestigungszapfen bei der Montage mit seinem länglichen Grundkörper in die vormontierte Hülse eingeführt.

Alternativ kann die Hülse ein integraler Bestandteil der Auflageplatte sein, wobei die Durchgangsöffnung der Auflageplatte für den länglichen Grundkörper des Befestigungszapfens durch die Hülse verläuft. Dann ist zwar die Hülse in die Auflageplatte integriert, aber immer noch Teil des Befestigungszapfens.

Bei der mehrteiligen Ausführung des Befestigungszapfens kann der längliche Körper eine Schraube, bspw. eine Linsenkopfschraube oder eine Senkkopfschraube sein. Andere Schraubenarten sind möglich.

Bei einer bevorzugten Ausführungsform ist das Eingriffselement zwischen dem Verbindungsbereich und dem Halteabschnitt angeordnet und dazu angepasst, den Halteabschnitt durch eine Rotationsbewegung unter Bildung des zweiten Formschlusses zu hintergreifen. Mit anderen Worten liegt vorzugsweise der Verbindungsbereich der Komponente zwischen dem Halteabschnitt und dem Eingriffselement. Dies ist dann der Fall, wenn bereits der Verbindungsbereich auf den Befestigungszapfen aufgesetzt ist und in der Durchgangsöffnung formschlüssig aufgenommen ist. Dadurch ist der erste Formschluss gebildet, der vorzugsweise eine Bewegung des Verbindungsbereichs und somit der Komponente in beide Querrichtungen, d.h. in X- und Y- Richtung, blockiert. Das Eingriffselement dient hier also nicht nur zum Verriegeln der Komponente in ihrer Endposition, sondern auch zum Halten der Komponente in der Zapfenlängsachsrichtung, d.h. in Z-Richtung. Das Eingriffselement fixiert den Verbindungsbereich an dem Strukturteil, insbesondere der Auflageplatte, die wiederum mit dem Strukturteil fest verbunden ist. Bei dieser Ausführungsform ist also ein Drehverschluss gebildet, wobei durch eine einfache Drehbewegung des Eingriffselements der zweite Formschluss realisierbar ist.

Vorzugsweise ist das Eingriffselement scheibenförmig ausgebildet und weist eine bogenförmige Öffnung auf, die einen ersten Öffnungsabschnitt umfasst, der größer als eine Außenkontur des Halteabschnitts des Befestigungszapfens ist, und die einen zweiten angrenzenden Öffnungsabschnitt aufweist, der kleiner als die Außenkontur des Halteabschnitts ist. Die bogenförmige Öffnung ist mit anderen Worten vorzugsweise durch eine bogenförmig verlaufende Schlüssellochöffnung gebildet. Alternativ kann, wie ähnlich der Durchgangsöffnung des Verbindungsbereichs, die bogenförmige Öffnung durch ein seitlich offenes und im vorliegenden Fall gebogen verlaufendes Langloch gebildet sein. Durch den ersten Öffnungsabschnitt kann der Halteabschnitt des Befestigungszapfens geführt werden. Durch Drehen des scheibenförmigen Eingriffselements hintergreift das Eingriffselement durch das Einfahren des Führungsabschnitts in den zweiten Öffnungsabschnitt. Mit anderen Worten überdeckt der Halteabschnitt das Eingriffselement im Bereich des zweiten Öffnungsabschnitts, wenn das Eingriffselement sich in der Verriegelungsstellung befindet. Dadurch wird auf einfache Weise der zweite Formschluss in Zapfenlängsrichtung realisiert.

Bevorzugt ist das Eingriffselement um eine Drehachse, die parallel zur Zapfenlängsachse verläuft, drehbar, wobei das Eingriffselement den Befestigungszapfen in einer ersten Drehstellung zur Auflösung des zweiten Formschlusses, insbesondere in Zapfenlängsachsrichtung, freigibt und in einer zweiten Drehstellung zur Bildung des zweiten Formschlusses, insbesondere in Zapfenlängsachsrichtung, formschlüssig hält.

Bei einer bevorzugten Ausführungsform ist die Komponente eine Rollenbahn oder eine Abdeckung, wobei die Rollenbahn vorzugsweise mehrere drehbar gelagerte Rollen und wenigstens einen Riegel und/oder eine PDU aufweist. Es kann der Verbindungsbereich und der Verriegelungsmechanismus an der Rollenbahn und an der Abdeckung vorgesehen sein. Andere Komponenten zur Befestigung an dem Strukturteil der Flugzeugstruktur sind möglich.

Nach einem nebengeordneten Aspekt betrifft die Erfindung einen Frachtraum für ein Flugzeug mit wenigstens zwei Spanten, die in Längsrichtung des Frachtraums einen Abstand voneinander aufweisen, und wenigstens zwei Strukturteile bildenden Querträgern, wobei je einer der Querträger an einer der Spanten quer zur Längsrichtung des Frachtraums verläuft, und wenigstens einer Komponente, insbesondere Frachtsystemkomponente und/oder Abdeckung, wobei wenigstens ein Schnellanschlusssystem nach einem der vorhergehenden Ansprüche vorgesehen ist, durch die die Komponente mit zumindest einem der Querträger lösbar verbunden ist.

Bevorzugt ist die Komponente an beiden Querträgern durch das Schnellanschlusssystem lösbar befestigt. Besonders bevorzugt ist die Auflageplatte und/oder der Befestigungszapfen auf einer dem Frachtraum zugewandten Oberfläche des einen oder der beiden Querträger aufliegend befestigt. Gleiches gilt für das Gegenstück zur Aufnahme des Eingriffselements. Weiter vorzugsweise weisen die Querträger vordefinierte Befestigungsbereiche auf. Diese Befestigungsbereiche umfassen vorzugsweise eine Vielzahl von Durchgangsöffnungen, die bspw. als Bohrungen ausgebildet sind. Die Durchgangsöffnungen bilden Anbindungspunkte für mehrere Befestigungszapfen. Die Befestigungszapfen werden bei der Montage an den Anbindungspunkten befestigt und vorzugsweise direkt mit dem Strukturteil verbunden. Dies kann durch eine Schraubverbindung, bei der die Befestigungszapfen direkt in das Strukturteil eingeschraubt werden, oder durch eine Schrauben-Mutter-Verbindung erfolgen. Andere Befestigungsarten zur Verbindung der Befestigungszapfen mit dem Strukturteil sind möglich.

Nach einem weiteren nebengeordneten Aspekt betrifft die Erfindung ein Flugzeug mit einem derartigen Frachtraum.

Bei einem erfindungsgemäßen Verfahren zum Umkonfigurieren bzw. Umrüsten eines derartigen Frachtraums wird wenigstens ein erfindungsgemäßes Schnellanschlusssystem verwendet, wobei sich die Komponente in einem mit dem Strukturteil verriegelten Zustand befindet, wobei das Eingriffselement von dem Gegenstück oder dem Strukturteil des Flugzeugs durch eine Translations- oder Rotationsbewegung derart weg bewegt wird, dass es zum Auflösen des zweiten Formschlusses in eine Entriegelungsstellung bewegt wird. Anschließend wird die Komponente, bspw. eine Rollenbahn, durch Verschieben des Verbindungsbereichs in eine Freigabestellung bewegt und der Verbindungsbereich von dem Befestigungszapfen abgenommen. Danach wird eine weitere Komponente auf den wenigstens einen Befestigungszapfen aufgesetzt und das Eingriffselement des Verriegelungsmechanismus der weiteren Komponente, bspw. eine Abdeckung, mit dem Gegenstück oder dem Strukturteil des Flugzeugs durch eine Rotationsbewegung des Eingriffselements formschlüssig befestigt.

Bei einem weiteren erfindungsgemäßen Verfahren zum Umkonfigurieren bzw. Umrüsten eines derartigen Frachtraums wird wenigstens ein erfindungsgemäßes Schnellanschlusssystem verwendet, wobei sich die Komponente in einem mit dem Strukturteil verriegelten Zustand befindet, wobei das Eingriffselement zu dem Befestigungszapfen durch eine Rotationsbewegung derart relativ bewegt wird, dass es zum Auflösen des zweiten Formschlusses in eine Entriegelungsstellung bewegt wird und sich die Komponente so in einer Freigabestellung befindet. Anschließend wird der Verbindungsbereich der Komponente von dem Befestigungszapfen abgenommen. Dann wird eine weitere Komponente auf den wenigstens einen Befestigungszapfen aufgesetzt und das Eingriffselement des Verriegelungsmechanismus der weiteren Komponente mit dem Gegenstück oder dem Strukturteil des Flugzeugs durch eine Rotationsbewegung des Eingriffselements formschlüssig befestigt.

Die zu wechselnden Komponenten sind mit einem Verbindungsbereich und einem Verriegelungsmechanismus des erfindungsgemäßen Schnellanschlusssystems ausgerüstet.

Soll ein Wechsel der Komponenten vollzogen werden, werden die vorstehend beschrieben Verfahrensschritte in umgekehrter Reihenfolge ausgeführt.

Zu den Vorteilen des Frachtraums, des Flugzeugs sowie des Verfahrens zur Umkonfigurierung wird auf die im Zusammenhang mit dem Schnellanschlusssystem erläuterten Vorteile verwiesen. Darüber hinaus können der Frachtraum, das Flugzeug sowie das Verfahren zur Umkonfigurierung alternativ oder zusätzlich einzelne oder eine Kombination mehrerer zuvor in Bezug auf das Schnellanschlusssystem genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie das erfindungsgemäße Schnellanschlusssystem bzw. der erfindungsgemäße Frachtraum ausgestaltet sein können.

In diesen zeigen,
- Fig. 1: eine Explosionsdarstellung eines Schnellanschlusssystems nach einem bevorzugten erfindungsgemäßen Ausführungsbeispiel;
- Fig. 2: eine Draufsicht auf das Schnellanschlusssystem gemäß Fig. 1, wobei eine Schnittlinie B-B durch das Schnellanschlusssystem dargestellt ist;
- Fig. 3: einen Schnitt entlang der Schnittlinie B-B gemäß Fig. 2, wobei das Eingriffselement in das Gegenstück eingreift;
- Fig. 4: einen Schnitt entlang der Schnittlinie B-B gemäß Fig. 2, wobei das Eingriffselement mit dem Gegenstück in Außereingriff steht;
- Fig. 5: eine Draufsicht auf das Schnellanschlusssystem gemäß Fig. 1, wobei eine Schnittlinie C-C durch das Schnellanschlusssystem dargestellt ist;
- Fig. 6: einen Schnitt entlang der Schnittlinie C-C gemäß Fig. 5, wobei sich der Hebel in einer ersten Hebelstellung befindet;
- Fig. 7: eine Seitenansicht eines Befestigungszapfens des Schnellanschlusssystems nach Fig. 1 und 7;
- Fig. 8: eine Draufsicht auf eine Rollenbahn als Komponente, die mehrere Verbindungsbereiche zur Befestigung mit den Befestigungszapfen aufweist;
- Fig. 9: eine Draufsicht auf ein Schnellanschlusssystem nach einem weiteren erfindungsgemäßen Ausführungsbeispiel, wobei eine Schnittlinie A-A durch das Schnellanschlusssystem dargestellt ist;
- Fig. 10: einen Schnitt entlang der Schnittlinie A-A gemäß Fig. 9;
- Fig. 11: eine Draufsicht auf das Schnellanschlusssystem gemäß Fig. 9, in der sich das Eingriffselement in einer Verriegelungsstellung befindet;
- Fig. 12: eine Teilansicht eines Frachtraums mit mehreren Schnellanschlusssystemen nach einem weiteren erfindungsgemäßen Ausführungsbeispiel;
- Fig. 13: eine Detailansicht des Frachtraums im Bereich eines der Schnellanschlusssysteme nach Fig. 12;
- Fig. 14: eine Unteransicht einer Abdeckung als Komponente mit einem Verriegelungsmechanismus und einem Verbindungsbereich des Schnellanschlusssystems nach Fig. 13;
- Fig. 15a,b: einen jeweiligen Längsschnitt durch einen alternativen Befestigungszapfen für das Schnellanschlusssystem nach Fig. 1;
- Fig. 16: eine perspektivische Ansicht einer Auflageplatte mit mehreren des Befestigungszapfens nach Fig. 15a;
- Fig. 17: eine perspektivische Ansicht einer Auflageplatte eines Schnellanschlusssystems nach einem weiteren erfindungsgemäßen Ausführungsbeispiel;
- Fig. 18: eine perspektivische Ansicht einer Auflageplatte eines Schnellanschlusssystems nach einem weiteren erfindungsgemäßen Ausführungsbeispiel;
- Fig. 19: eine perspektivische Ansicht eines Verriegelungsmechanismus im entriegelten Zustand eines Schnellanschlusssystems nach einem weiteren erfindungsgemäßen Ausführungsbeispiel;
- Fig. 20: einen Querschnitt durch den Verriegelungsmechanismus nach Fig. 19;
- Fig. 21: eine perspektivische Ansicht des Verriegelungsmechanismus nach Fig. 19 im verriegelten Zustand;
- Fig. 22: einen Querschnitt durch den Verriegelungsmechanismus nach Fig. 20;
- Fig. 23: eine perspektivische Draufsicht einer Bodenplatte mit mehreren Gegenstücken zur Verbindung mit den Verrieglungsmechanismen von erfindungsgemäßen Schnellanschlusssystemen;
- Fig. 24: eine perspektivische Ansicht einer Auflageplatte eines Schnellanschlusssystems nach einem weiteren erfindungsgemäßen Ausführungsbeispiel; und
- Fig. 25: eine perspektivische Darstellung einer Riegeleinrichtung als Komponente und mit einem Schnellanschlusssystem nach Fig. 24.

In der nachfolgenden Beschreibung werden für gleiche und gleich wirkende Teile dieselben Bezugsziffern verwendet.

Üblicherweise verwendet man ein kartesisches Koordinatensystem, um innerhalb eines Flugzeugs einzelne Richtungsangaben bereitzustellen. Hierbei erstreckt sich die X-Achse vom Heck zum Bug, die Y-Achse verläuft quer zur X-Achse und liegt im Wesentlichen in der von den Flügeln aufgespannten Ebene. Die Z-Achse steht senkrecht auf der X- und Y-Achse.

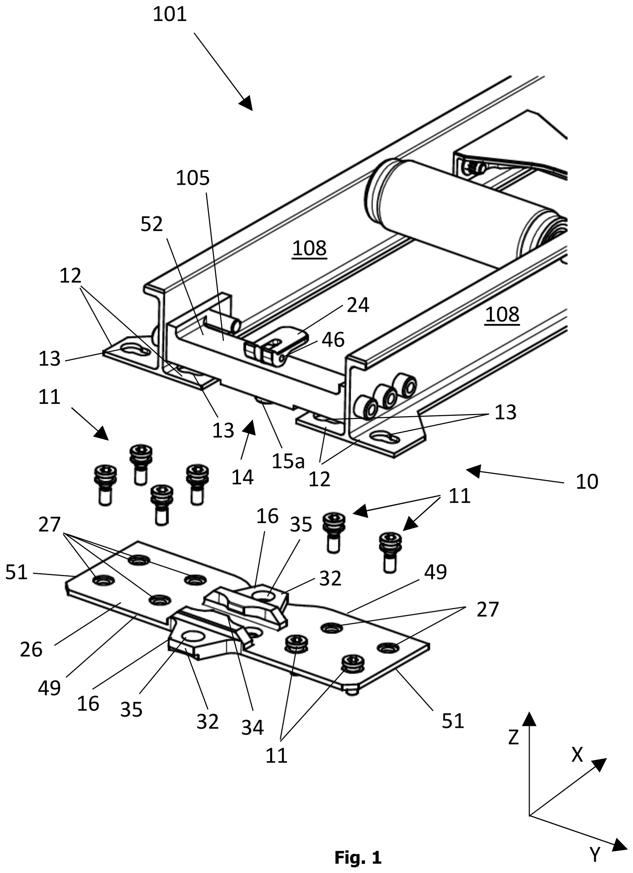

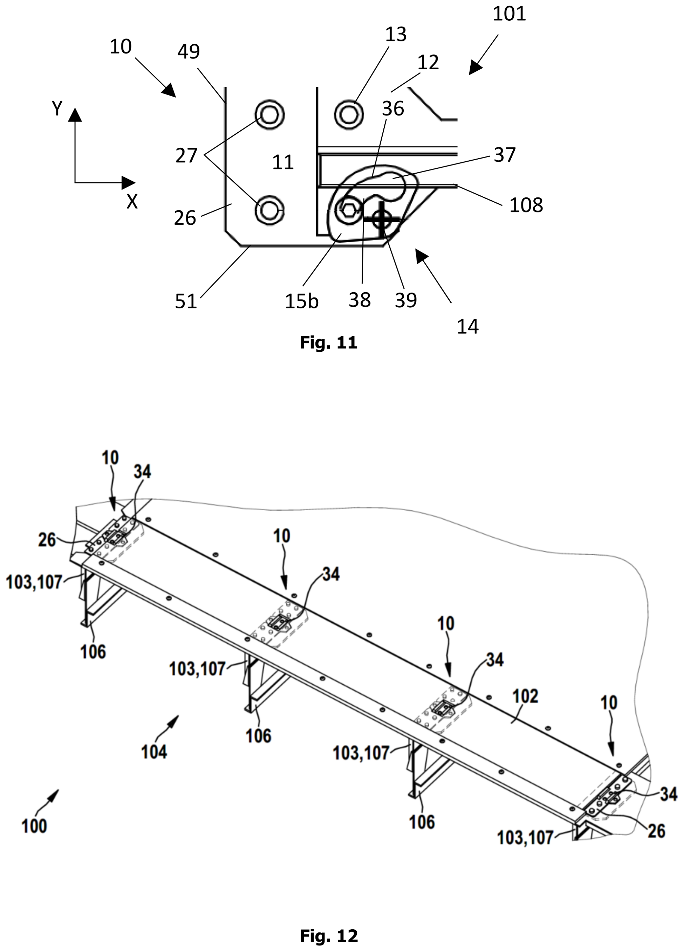

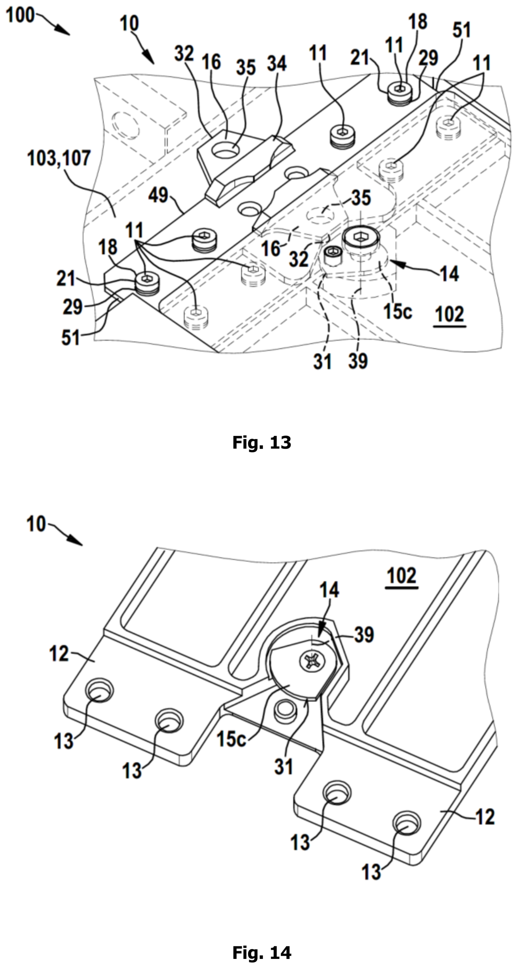

Fig. 1 bis 8 zeigen ein Schnellanschlusssystem 10 nach einem bevorzugten erfindungsgemäßen Ausführungsbeispiel, um eine Komponente eines Frachtraums 100, im vorliegenden Fall eine Rollenbahn 101, mit einem Strukturteil 103 einer Flugzeugstruktur 104 lösbar und damit wechselbar zu befestigen. Die Flugzeugstruktur 104 und damit das Strukturteil 103 ist in den Fig. 12 und 13 zu sehen.

Das Schnellanschlusssystem 10 umfasst mehrere Befestigungszapfen 11 mit jeweils einer Zapfenlängsachse LA. Die Befestigungszapfen 11 bilden jeweils ein separates Bauteil zur Befestigung der Rollenbahn 101 an dem Strukturteil 103. Wie in den Fig. 12 und 13 gezeigt, ist das Strukturteil 103 durch einen Querträger 107 gebildet, der sich in Y-Achsrichtung zwischen zwei ansteigenden Abschnitten eines Spanten 106 erstreckt. Die Befestigungszapfen 11 sind also im montierten Zustand auf dem Querträger 107 befestigt. Konkret werden die Befestigungszapfen 11 an vordefinierten Anbindungspunkten, die Durchgangsöffnung umfassen, mit dem Querträger 107 verbunden. Dies kann durch Einschrauben der Befestigungszapfen 11 und/oder eine Schrauben-Mutter-Verbindung erfolgen.

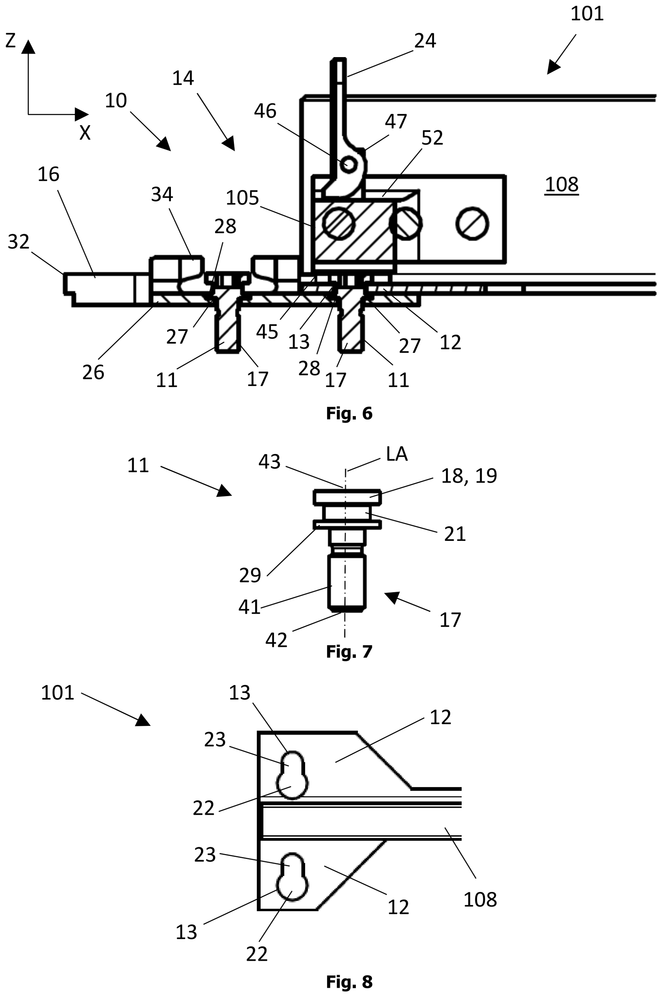

In Fig. 7 ist exemplarisch einer der Befestigungszapfen 11 gezeigt, die einteilig ausgebildet sind, wobei alle dieselbe Gestalt und Form aufweisen. Die Ausgestaltung der Befestigungszapfen 11 wird anhand Fig. 7 näher erläutert, wobei die nachfolgende Beschreibung des Befestigungszapfens 11 für alle einteiligen Befestigungszapfen 11 gilt.

Der Befestigungszapfen 11 gemäß Fig. 7 weist einen länglichen Grundkörper 17 auf. Der längliche Grundkörper 17 umfasst einen Befestigungsabschnitt 41 mit einem Außengewinde, das sich entlang der Zapfenlängsachse LA erstreckt. Wie ersichtlich ist, läuft das Außengewinde auf ein erstes Längsende 42 des Befestigungszapfens 11 zu. Über den Befestigungsabschnitt 41 ist der Befestigungszapfen 11 mit dem Querträger 107 verbunden.

Des Weiteren weist der Befestigungszapfen 11 einen Halteabschnitt 18 auf, der quer zur Zapfenlängsachse LA an dem Grundkörper 17 absteht. Der Halteabschnitt 18 dient dazu im befestigten Zustand der Rollenbahn 101 einen Verbindungsbereich 12 der Rollenbahn 101 in einer Richtung parallel zur Zapfenlängsachse LA unter Bildung eines Formschlusses festzusetzen. Diese Richtung wird auch als Zapfenlängsachsrichtung bezeichnet, die einer Z-Richtung entspricht. Bei dem vorliegenden Beispiel verläuft die Zapfenlängsachsrichtung parallel zur Z-Richtung des Flugzeugs. Der Halteabschnitt 18 ist an einem zweiten Längsende 43 des Befestigungszapfens 11 angeordnet. Konkret bildet der Halteabschnitt 18 einen Kragen 19, der in Bezug auf die Zapfenlängsachse LA an dem Grundkörper 17 vollständig umlaufend ausgebildet ist.

Die dargestellte einteilige Ausführung des Befestigungszapfens 11 erlaubt eine optimale Baugröße bei optimalem Gewicht. Es sind auch Ausführungen denkbar, bei denen die Befestigung mittels einer durchgeführten Schraube, z.B. Senkkopfschraube erfolgt. In diesem Fall vergrößert sich jedoch wiederum der erforderliche Durchmesser des Befestigungszapfens.

Alternativ ist möglich, dass der Befestigungszapfen 11 zwei oder mehrteilig ausgebildet ist. Der Durchmesser des Befestigungszapfens 11 ist hier im Vergleich zu dem einteiligen Befestigungszapfen 11 vergrößert. Auf die zwei oder mehrteilige Ausführung des Befestigungszapfens 11 wird später näher eingegangen.

Fig. 7 zeigt ferner einen an den Kragen 19 angrenzenden Führungsabschnitt 21 des Befestigungszapfens 11. Der Führungsabschnitt 21 ist entlang der Zapfenlängsachse LA neben dem Kragen 19 ausgebildet. Der Führungsabschnitt 21 dient zum Führen des Verbindungsbereichs 12 der Rollenbahn 101 bei einem Befestigungsvorgang der Rollenbahn 101. Der Führungsabschnitt 21 weist eine geringere Breite quer zur Zapfenlängsachse LA als der Kragen 19 auf.

An den Führungsabschnitt 21 angrenzend ist ein Einsitzabschnitt 29 des Befestigungszapfens 11 ausgebildet. Der Einsitzabschnitt 29 ragt quer zur Zapfenlängsachse LA über der Führungsabschnitt 21 hinaus. Der Einsitzabschnitt 29 bildet einen weiteren umlaufenden Kragen an dem Grundkörper. Der Einsitzabschnitt 29 dient zum Einsitzen in eine Durchgangsöffnung bspw. einer Auflageplatte. Der Einsitzabschnitt 29 und der Halteabschnitt 18 weisen dieselbe Breite quer zur Zapfenlängsachse LA auf. Konkret ragen der Einsitzabschnitt 29 und der Halteabschnitt 18 gleichweit über den Führungsabschnitt 21 quer zur Zapfenlängsachse LA über.

Der Führungsabschnitt 21 ist somit zwischen dem Halteabschnitt 18 und dem Einsitzabschnitt 29 angeordnet. Konkret bildet der Führungsabschnitt 21 eine die Zapfenlängsachse LA umlaufende Nut in dem Grundkörper 17.

Wie in Fig. 1 und Fig. 7 gut zu erkennen ist, ist der Befestigungszapfen 11 im Wesentlichen zylindrisch ausgebildet. Der Halteabschnitt 18 und der Führungsabschnitt 21 weisen jeweils einen Durchmesser auf, wobei der Durchmesser des Halteabschnitts 18 größer als der Durchmesser des Führungsabschnitts 21 ist. Ebenso weist der Einsitzabschnitt 29 einen Durchmesser auf, der größer als der Durchmesser des Führungsabschnitts 21 ist. In Fig. 7 ist erkennbar, dass der Halteabschnitt 18 in Zapfenlängsachsrichtung dicker als der Einsitzabschnitt 29 ist. Des Weiteren ist der Führungsabschnitt 21 in Zapfenlängsachsrichtung dicker als der Einsitzabschnitt 29.

Wie in Fig. 1 gezeigt ist, sind insgesamt acht Befestigungszapfen 11 vorgesehen, wobei vier Befestigungszapfen 11 zum Anschließen der Rollenbahn 101 dienen. Die weiteren vier Befestigungszapfen 11 dienen bspw. zum Anschließen einer weiteren Rollenbahn 101, um die vorangehende Rollenbahn 101 zu verlängern.

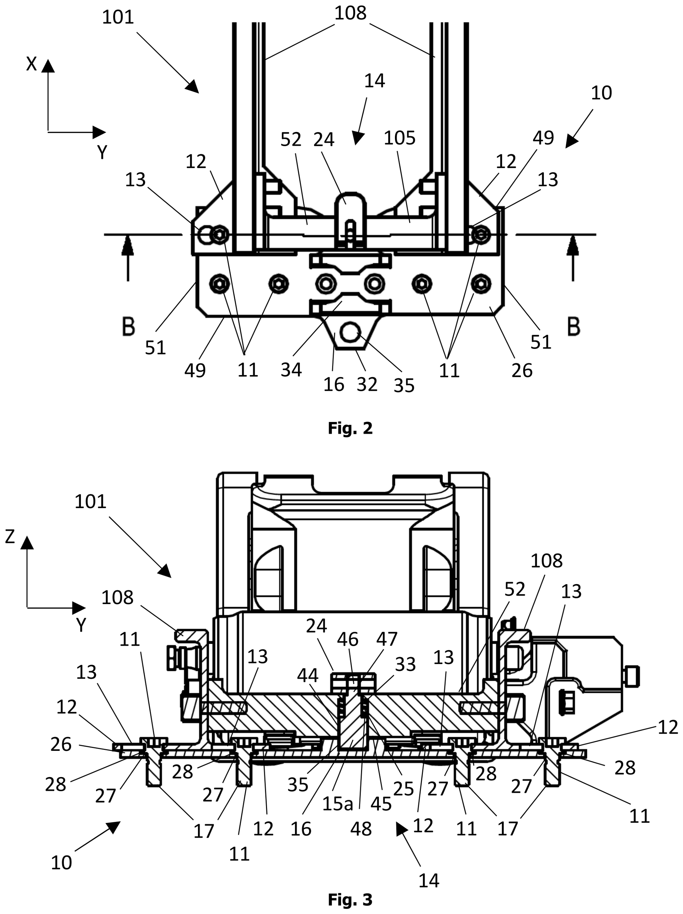

Ferner zeigen die Fig. 1 bis 6 und Fig. 8, dass das Schnellanschlusssystem 10 mehrere Verbindungsbereiche 12 aufweist, die ein oder mehrere Durchgangsöffnungen 13 zur Aufnahme der Befestigungszapfen 11 aufweisen. In Fig. 1 und 2 ist gut ersichtlich, dass die Verbindungsbereiche 12 an einer untenliegenden Seite von zwei gegenüber angeordneten Rollenbahnprofilen 108 angeordnet sind. Die Verbindungsbereiche 12 sind plattenförmige Elemente, die sich an jedem Rollenbahnprofil 108 quer zur Längsrichtung der Rollenbahn 101 nach außen erstrecken. Die Verbindungsbereiche 12 sind an den Rollenbahnprofilen 108 jeweils innenseitig und außenseitig ausgebildet. Diese sind Teil der Rollenbahnprofile 108 und somit einstückig mit diesen ausgebildet. Jeweils zwei der Verbindungsbereiche 12 sind an einem der Rollenbahnprofile 108 flügelartig ausgebildet. Die Verbindungsbereiche 12 bilden jeweils einen Anschlussflansch zur Verbindung mit den Befestigungszapfen 11.

Jeder der Verbindungsbereiche 12 weist, wie beschrieben, eine oder mehrere Durchgangsöffnungen 13 für die Befestigungszapfen 11 auf, um mit den Befestigungszapfen 11 einen ersten Formschluss auszubilden.

Die Fig. 8 zeigt eine Draufsicht auf eines der beiden Rollenbahnprofile 108, anhand der die Durchgangsöffnungen 13 nachfolgend beschrieben werden. Die Durchgangsöffnungen 13 des Verbindungsbereichs 12 sind dazu angepasst, den Halteabschnitt 18 des Grundkörpers 17 hindurchzuführen und den Führungsabschnitt 21 des Grundkörpers 17 unter Bildung des ersten Formschlusses aufzunehmen.

Aus den Figuren geht hervor, dass die Durchgangsöffnungen 13 der Verbindungsbereiche 12 schlüssellochförmig ausgebildet sind. Die Durchgangsöffnung 13 des Verbindungsbereichs 12 umfassen einen ersten Öffnungsbereich 22 und einen angrenzenden zweiten Öffnungsbereich 23, die ineinander übergehen. Der erste Öffnungsbereich 22 ist so ausgebildet ist, dass der Halteabschnitt 18 des zugeordneten Befestigungszapfens 11 hindurchführbar ist und der zweite Öffnungsbereich 23 so ausgebildet ist, dass der Halteabschnitt 18 den zweiten Öffnungsbereich 23 nach außen hin überragt.

Konkret weist der erste Öffnungsbereich 22 der Durchgangsöffnungen 13 einen Innendurchmesser auf, der im Wesentlichen größer als der Durchmesser des Halteabschnitts 18 des Befestigungszapfens 11 ist. Der zweite Öffnungsbereich 23 weist eine Langlochform auf, die zum ersten Öffnungsbereich 22 hin offen ist. Die Breite des zweiten Öffnungsbereichs 23, insbesondere des Langlochs, ist kleiner als der Durchmesser des Halteabschnitts 18 und größer oder im Wesentlichen gleich dem Durchmesser des Führungsabschnitts 21. Dadurch kann der jeweilige Befestigungszapfen 11 mit seinem Halteabschnitt 18 durch den ersten Öffnungsbereich 22 hindurch und anschließend die Rollenbahn 101 quer zur Zapfenlängsachse LA in den zweiten Öffnungsbereich 23 so lange verschoben werden, bis der Führungsabschnitt 21 an einem dem ersten Öffnungsbereich 22 gegenüberliegenden Ende des zweiten Öffnungsbereichs 23 anschlägt. Die Fig. 2 bis 5 zeigen gut erkenntlich, den vorstehend beschriebenen Zustand, in dem sich die Rollenbahn 101 an ihrer Endposition befindet.

In diesem Zustand ist der erste Formschluss zwischen dem Verbindungsbereich 12 und dem Befestigungszapfen 11 gebildet. Dabei ist in einer von zwei Richtungen quer zur Zapfenlängsachse LA, konkret in X-Richtung, und in der Zapfenlängsachsrichtung, konkret in Z-Richtung, eine Bewegung der Rollenbahn 101 blockiert. Dies bedeutet, dass der erste Formschluss eine Bewegung der Rollenbahn 101 in beide X-Richtungen und in Z-Richtung blockiert. Der Befestigungszapfen 11 ist in der Durchgangsöffnung 13 des Verbindungsbereichs 12 formschlüssig aufgenommen. Mit anderen Worten ist dadurch eine Bewegung der Rollenbahn 101 entlang der X-Achse des Flugzeugs und der Z-Achse des Flugzeugs unterbunden.

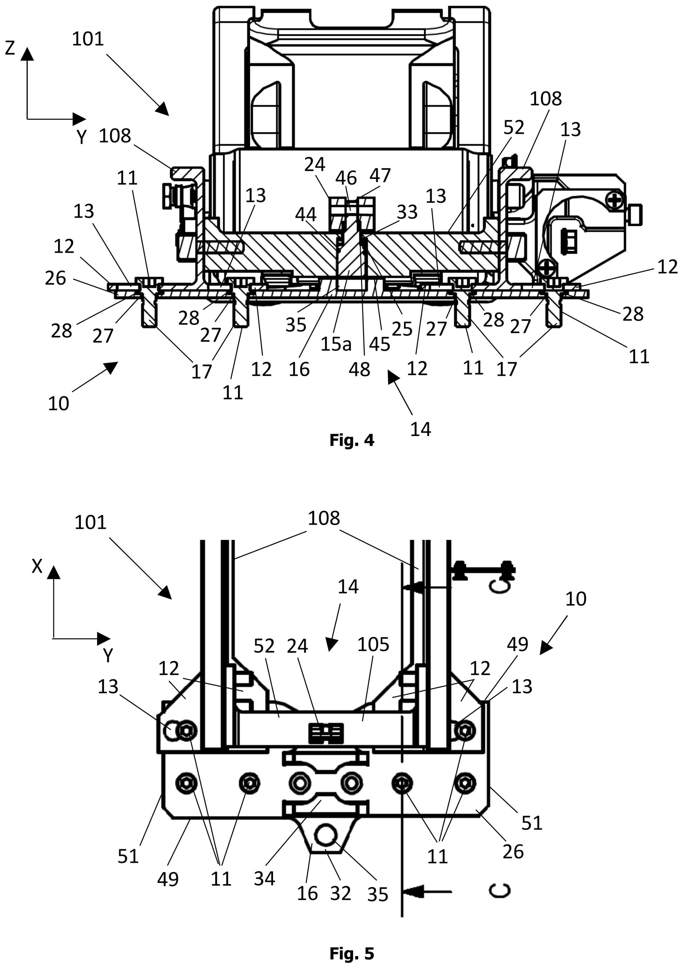

Ferner ist in Fig. 5 und 8 erkennbar, dass jeweils an den Rollenbahnprofilen 108 gegenüberliegende Durchgangsöffnungen 13 der Verbindungsbereiche 12 quer zur Längsrichtung der Rollenbahn 101 auf einer Linie ausgerichtet sind. Dabei verlaufen die Durchgangsöffnungen 13 quer zur Längsrichtung der Rollenbahn 101.

Um nun die Rollenbahn 101 in ihrer eingenommenen Endposition unter Bildung eines zweiten Formschlusses zu verriegeln, ist ein Verriegelungsmechanismus 14 vorgesehen, der an der Rollenbahn 101 angeordnet ist. Der Verriegelungsmechanismus 14 weist ein Eingriffselement 15a, einen Hebel 24 und ein Federelement 25 auf. Das Eingriffselement 15a ist bolzenförmig ausgebildet. Mit anderen Worten ist das Eingriffselement 15a zylindrisch ausgebildet. Andere Formen sind möglich. Das Eingriffselement 15a ist in einem Halteteil 105 der Rollenbahn 101 translatorisch, also längsverschiebbar, geführt. Das Halteteil 105 erstreckt sich quer zur Längsrichtung der Rollenbahn 101 zwischen den beiden gegenüberliegenden Rollenbahnprofilen 108. Das Halteteil 105 ist ein Steg, der die beiden Rollenbahnprofile 108 verbindet.

Das Halteteil 105 weist eine Bohrung 44 auf, in der das Eingriffselement 15a längsverschiebbar geführt ist. Das Eingriffselement 15a kann an einer Unterseite 45 des Halteteils 105 aus der Bohrung 44 austreten und in diese wieder einfahren. Die Position des Eingriffselements 15a ist abhängig von der Stellung des Hebels 24, mit dem das Eingriffselement 15a über ein Drehgelenk 46 verbunden ist. Der Hebel 24 ist auf einer Oberseite 52 des Halteteils 105 über das Drehgelenk schwenkbar gelagert. Wie in den Fig. 1 bis 6 erkennbar, kann der Hebel 24 zwei Hebelstellungen einnehmen, die durch eine exzentrische Form einer Kontaktfläche des Hebels 24 vorgegeben wird, über die der Hebel 24 mit der Oberseite 52 des Halteteils 105 in Kontakt steht.

Das Eingriffselement 15a weist einen Verbindungsstift 47 auf, der durch einen Durchbruch des Halteteils 105 zur Oberseite 52 hin geführt ist. Konkret befindet sich das Drehgelenk 46 an dem über die Oberseite 52 des Halteteils 105 vorstehenden Teilbereich des Verbindungsstiftes 47, an dem auch der Hebel 24 angeordnet ist. In der Bohrung 44 weist das Eingriffselement 15a einen weiteren Teilbereich auf, der eine größere Breite als der Verbindungsstift 47 umfasst. In Fig. 3 und 4 ist gut erkennbar, dass das Eingriffselement 15a einen Absatz 48 aufweist. Es ist auch gezeigt, dass sich das Federelement 25 einerseits an einer an den Durchbruch angrenzenden Innenfläche 33 der Bohrung 44 und andererseits an dem Absatz 48 des Eingriffselements 15a abstützt.

In einer ersten Hebelstellung ist der Hebel 24 stehend angeordnet. Wie in Fig. 6 erkennbar, verläuft der Hebel 24 im Wesentlichen senkrecht zur Längsrichtung der Rollenbahn 101. In der ersten Hebelstellung ist der breitere Teilbereich des Eingriffselements 15a vollständig in der Bohrung 44 aufgenommen, was in Fig. 4 gezeigt ist. In dieser Stellung ist das Federelement 25 zwischen dem Absatz 48 des Eingriffselements 15a und der Innenfläche 33 der Bohrung 44 komprimiert und bringt dadurch eine Federkraft auf, die das Eingriffselement 15a in Ausfahrrichtung vorspannt.

In der ersten Hebelstellung steht das Eingriffselement 15a in Außereingriff mit einer Öffnung 35 eines Gegenstücks 16, mit dem der zweite Formschluss gebildet werden kann, um eine Bewegung der Rollenbahn 101 in der zweiten Querrichtung, konkret in Y-Richtung zu blockieren und so die Rollenbahn 101 ihrer Endposition zu verriegeln. In der zweiten Querrichtung bedeutet, dass der zweite Formschluss eine Bewegung der Rollenbahn 101 in beide Y-Richtungen blockiert.

Durch die stehende Position des Hebels 24 in der ersten Hebelstellung liegt der Hebel 24 mit einer ersten Fläche auf der Oberseite 52 des Halteteils 105 flächig auf, wobei die Federkraft den Hebel 24 gegen die Oberseite 52 des Halteteils 105 presst und so der Hebel 24 selbstständig in der ersten Hebelstellung gehalten wird. Hierdurch ist es möglich, auch längere Baugruppen mit mehreren derartigen Verriegelungsmechanismen einfach im Flugzeug bzw. Frachtraum zu positionieren und einzubauen.

Um den Hebel 24 von der ersten Hebelstellung in eine zweite Hebelstellung zu überführen, weist dieser an seinem mit der Oberseite 52 des Halteteils 105 in Kontakt stehenden Längsende eine gekrümmte, insbesondere exzentrische, Form auf, die ausgehend von der ersten Fläche in eine senkrecht dazu ausgerichtete zweite Fläche übergeht. Diese beiden Flächen sowie die gekrümmte Form bilden die vorgenannte Kontaktfläche. Der Hebel 24 gleitet über die gekrümmte Form beim Überführen zwischen den beiden Hebelstellungen ab. Dabei unterstützt das Federelement 25 durch die Federkraft die Überführbewegung. Durch diese gekrümmte Form wird das Eingriffselement 15a beim Überführen von der ersten in die zweite Hebelstellung abgesenkt, wodurch der zweite Formschluss gebildet wird. Beim Überführen von der zweiten in die erste Hebelstellung hingegen wird das Eingriffselement 15a angehoben, sodass der zweite Formschluss aufgehoben wird und die Rollenbahn 101 über die schlüssellochförmigen Durchgangsöffnungen 13 der Verbindungsbereiche 12 quer zur Längsrichtung der Rollenbahn 101 verschiebbar ist.

In der zweiten Hebelstellung ist der Hebel 24 liegend angeordnet. Wie in Fig. 1 erkennbar, verläuft der Hebel 24 im Wesentlichen in Längsrichtung der Rollenbahn 101. In der zweiten Hebelstellung ist der breitere Teilbereich des Eingriffselements 15a teilweise aus der Bohrung 44 ausgefahren, was in Fig. 3 gezeigt ist. In dieser Stellung ragt das Eingriffselement 15a in die Öffnung 35 des Gegenstücks 16 ein und bildet dadurch den zweiten Formschluss, der die Rollenahn 101 endgültig verriegelt.

Durch die liegende Position des Hebels 24 in der zweiten Hebelstellung liegt der Hebel 24 mit der zweiten Fläche auf der Oberseite 52 des Halteteils 105 flächig auf, wobei eine restliche Federkraft den Hebel 24 gegen die Oberseite 52 des Halteteils 105 presst und so der Hebel 24 selbstständig in der zweiten Hebelstellung gehalten wird. Zeitgleich bewirkt das Federelement 25, dass das Eingriffselement 15a in Eingriff mit der Öffnung 35 des Gegenstücks 16 bleibt und sichert so den zweiten Formschluss.

Der Verriegelungsmechanismus 14 kann alternativ eine drehbeweglich gelagerte Kulisse aufweisen, die mit dem Eingriffselement 15a derart gekoppelt ist, dass sie durch eine Drehbewegung ein Anheben oder Absenken des Eingriffselements 15a bewirkt. Dies stellt eine weitere Möglichkeit dar, das Eingriffselement 15a zu steuern. Bspw. kann die Kulisse durch eine z.B. 90° Drehbewegung ein Anheben bzw. Absenken des Eingriffselements 15a realisieren.

Wie in den Fig. 3 und 4 erkennbar ist, korrespondiert die Öffnung 35 des Gegenstücks 16 mit dem Eingriffselement 15a in der Endposition der Rollenbahn 101. Auf das Gegenstück 16 wird später genauer eingegangen.

Aus den Fig. 1 bis 6 geht ferner hervor, dass das Schnellanschlusssystem 10 eine Auflageplatte 26 zur Auflage der Verbindungsbereiche 12 der Rollenbahn 101 aufweist, die je Befestigungszapfen 11 eine Durchgangsöffnung 27 umfasst. Über die Auflageplatte 26 liegen die Befestigungszapfen 11 indirekt auf dem Querträger 107 auf.

Die Auflageplatte 26 umfasst zwei gegenüberliegende Längsseiten 49 und zwei gegenüberliegende Breitseiten 51. Auf jeder Längsseite 49 der Auflageplatte 26 sind vier Durchgangsöffnungen 27 der Auflageplatte 26 angeordnet. Die vier Durchgangsöffnungen 27 sind in Längsrichtung der Auflageplatte 26 auf derselben Linie liegend angeordnet. Die schlussendliche Lage der Durchgangsöffnungen 27 wird durch die Lage der vordefinierten Anbindungspunkte, insbesondere Anschraubpunkte, an dem Strukturteil 103 der Flugzeugstruktur 104 vorgegeben.

Die Durchgangsöffnungen 27 weisen jeweils einen Abstand zueinander auf, der dem Abstand zwischen den auf einer Linie liegenden Durchgangsöffnungen 13 von nebeneinander angeordneten Verbindungsbereichen 12 der Rollenbahn 101 entspricht. Die jeweilige Anzahl und Position der Durchgangsöffnungen 27 hängen hierbei von der betreffenden Flugzeugstruktur 104 ab, die die jeweiligen Anbindungspunkte bzw. Befestigungspunkte vorgibt.

Die Auflageplatte 26 weist eine Dicke von 1 mm bis 3 mm auf. Die Durchgangsöffnungen 27 der Auflageplatte 26 umfassen einen Absatz 28, an dem die Befestigungszapfen 11 mit ihren Einsitzabschnitten 29 aufliegen. Der Einsitzabschnitt 29 der Befestigungszapfen 11 ist derart in der jeweiligen Durchgangsöffnung 27 formschlüssig aufgenommen, dass dieser mit einer obenliegenden Oberfläche der Auflageplatte 26 bündig abschließt. Dadurch liegen die Verbindungsbereiche 12 der Rollenbahn 101 auf der Auflageplatte 26 flächig auf. Dies ist bspw. in den Fig. 3, 4 und 6 gut erkennbar. Die Durchgangsöffnungen 27 sind im Wesentlichen zylinderförmig ausgebildet und dienen zudem zur exakten Positionierung der Befestigungszapfen 11 während des Einbaus.

Die Durchgangsöffnungen 27 der Auflageplatte 26 sind abhängig von den in dem Querträger 107 vordefinierten Anbindungspunkten ausgebildet und angeordnet. Dies ermöglicht eine Verbindung der Befestigungszapfen 11 mit dazwischenliegender Auflageplatte 26. Die Auflageplatte 26 dient neben der Einstellung der exakten Höhenlage der Befestigungszapfen 11 auch als Montagehilfe. Die Befestigungszapfen 11 können vorab in die Auflageplatte 26 eingesetzt werden und anschließend auf den Querträger 107 an der Stelle der Anbindungspunkte angeordnet werden. Die Befestigungszapfen 11 werden dadurch vorpositioniert. Alternativ kann die Auflageplatte 26 auf den Querträger 107 aufgesetzt werden, sodass die Durchgangsöffnungen 27 mit den Anbindungspunkten an dem Querträger 107 korrespondieren. Anschließend können dann die Befestigungszapfen 11 eingesetzt und mit dem Querträger 107 verbunden werden.

Wie in Fig. 1 ersichtlich, umfasst die Auflageplatte 26 zusätzlich das Gegenstück 16, in dessen Öffnung 35 das Eingriffselement 15a zur Herstellung des zweiten Formschlusses eingreifen kann. Das Gegenstück 16 ist mit der Auflageplatte 26 einstückig ausgebildet. Die Öffnung 35 durchdringt das Gegenstück 16 in vertikaler Richtung und ist im Wesentlichen zum Eingriffselement 15a komplementär ausgebildet.

Ferner ist erkennbar, dass die Auflageplatte 26 zwei solche Gegenstücke 16 aufweist, wobei je eines der Gegenstücke 16 auf einer der Längsseiten 49 der Auflageplatte 26 angeordnet ist. Die Gegenstücke 16 sind in einem Mittelbereich der Längsseiten 49 angeordnet und in entgegengesetzte Richtungen ausgerichtet. Konkret weisen die Gegenstücke 16 jeweils eine Nase 32 auf, die über die Längsseite 49 der Auflageplatte 26 hinausragt. Die Nasen 32 sind so ausgebildet, dass sie im eingebauten Zustand der Auflageplatte 26 von der Oberfläche bzw. Oberseite des Querträgers 107 einen Abstand aufweisen. Mit anderen Worten ist zwischen den Nasen 32 und dem Querträger 107 ein Freiraum gebildet, in den bspw. ein weiteres Eingriffselement einer Abdeckung eingreifen kann.

Die genaue Ausführung, ob Auflageplatten 26 mit ein oder zwei Gegenstücken 16 zur Anwendung kommen, ist abhängig von der jeweiligen Position im Frachtraum, bzw. Frachtsystem. Typischerweise sind an Auflageplatten 26 im Bereich von Rollenbahntrennstellen zwei Gegenstücke 16 angeordnet (für jede Rollenbahnbaugruppe eines) und in Bereichen innerhalb von Rollenbahnen 101 oder Komponenten Auflageplatten 26 mit einem Gegenstück 16.

Zwischen den beiden Gegenstücken 16 ist ein Schienenabschnitt 34 ausgebildet. Der Schienenabschnitt 34 bildet eine Lochschiene, die als Verzurrpunkt dient. Die Lochschiene verläuft in Längsrichtung der Auflageplatte 26. Die Lochschiene ist mit der Auflageplatte 26 einstückig ausgebildet.

Abhängig von der jeweiligen Anwendung kann auch nur ein Gegenstück 16 ohne Schienenabschnitt 34 Teil der Auflageplatte 26 sein. Alternativ kann die Auflageplatte 26 als flache Platte ausgestaltet und das Gegenstück 16 als separates Teil an anderer Stelle, jedoch in der Nähe der Befestigungszapfen 11 montiert bzw. befestigt sein.

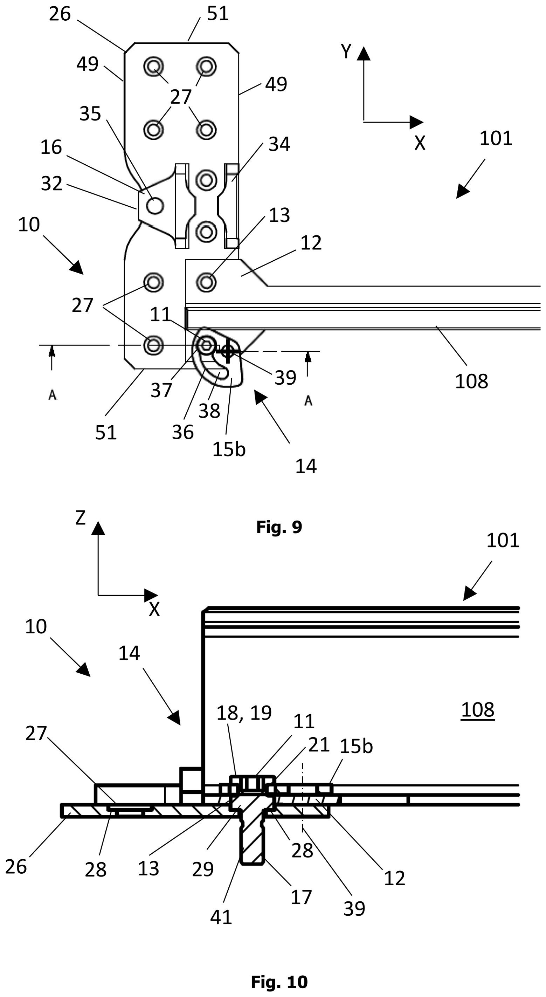

Die Fig. 9 bis 11 zeigen ein Schnellanschlusssystem 10 nach einem weiteren erfindungsgemäßen Ausführungsbeispiel. Im Folgenden werden lediglich die Unterschiede des Schnellanschlusssystems 10 zu dem Schnellanschlusssystem 10 gemäß Fig. 1 bis 8 beschrieben, um Dopplungen zu vermeiden.

Wie in Fig. 10 gut erkennbar ist, weist der Einsitzabschnitt 29 des Befestigungszapfens 11 eine Dicke in Zapfenlängsachsrichtung auf, die größer als eine jeweilige Dicke des Halteabschnitts 18 und des Führungsabschnitts 21 ist. Aus Fig. 10 geht weiter hervor, dass der Einsitzabschnitt 29 des Befestigungszapfens 11 nicht nur in der Durchgangsöffnung 27 der Auflageplatte 26 formschlüssig einsitzt, sondern auch in der Durchgangsöffnung 13 des Verbindungsbereichs 12. Dies gilt für alle Befestigungszapfen 11, die mit einem der Verbindungsbereiche 12 der Rollenbahn 101 verbunden sind. Die Durchgangsöffnung 13 des jeweiligen Verbindungsbereichs 12 und die jeweils korrespondierende Durchgangsöffnung 27 der Auflageplatte 26 weisen zumindest im Übergang zwischen den beiden Öffnungen denselben Durchmesser auf, um den Einsitzabschnitt 29 formschlüssig aufzunehmen. Der Außendurchmesser des Einsitzabschnitts 29 entspricht dabei im Wesentlichen den angrenzenden Innendurchmessern der Durchgangsöffnungen 13, 27.

Ist die Rollenbahn 101 mit ihren Verbindungsbereichen 12 über die Durchgangsöffnungen 13 auf die Befestigungszapfen 11 aufgesetzt, ist ein erster Formschluss in beide Querrichtungen bezogen auf die Zapfenlängsachse LA gebildet. In beide Querrichtungen bedeutet, dass der erste Formschluss eine Bewegung der Rollenbahn 101 in beide X-Richtungen und in beide Y-Richtungen blockiert. In diesem Zustand befindet sich die Rollenbahn 101 bereits in ihrer Endposition.

Ein weiterer Unterschied ist, dass bei dem Schnellanschlusssystem gemäß Fig. 9 bis 11 die Durchgangsöffnungen 13 der Verbindungsbereiche 12 der Rollenbahn 101 kreisrund ausgebildet sind. Konkret sind diese Durchgangsöffnungen 13 als Bohrungen ausgebildet. Diese können geringfügig größer ausgebildet sein, als der Durchmesser des Halteabschnitts 18, um ein Hindurchführen des Halteabschnitts 18 des Befestigungszapfens 11 bei der Montage bzw. Demontage zu gewährleisten.

Bei dem Schnellanschlusssystem 10 gemäß Fig. 9 bis 11 fehlt das Halteteil 105. Auch der Verriegelungsmechanismus 14 ist bei diesem Schnellanschlusssystem 10 anders ausgebildet als bei dem Schnellanschlusssystem gemäß Fig. 1 bis 8. Wie in Fig. 9 und 11 erkennbar ist, weist der Verriegelungsmechanismus 14 ein Eingriffselements 15b auf, das scheibenförmig ausgebildet ist. Das Eingriffselement 15b weist eine bogenförmige Öffnung 36 zur Verriegelung des Befestigungszapfens 11 auf. Die bogenförmige Öffnung 36 umfasst einen ersten Öffnungsbereich 37, der größer als der Durchmesser des Halteabschnitts 18 des jeweiligen Befestigungszapfens 11 ist. Des Weiteren umfasst die bogenförmige Öffnung 36 einen zweiten angrenzenden Öffnungsbereich 38, der kleiner als der Durchmesser des Halteabschnitts 18, aber größer oder gleich dem Durchmesser des Führungsabschnitts 21 ist. So ist eine Beweglichkeit des Eingriffselements 15b in Bezug auf den Befestigungszapfen 11 sichergestellt, auch wenn der Führungsabschnitt 21 in dem zweiten Öffnungsbereich 38 der bogenförmigen Öffnung 36 geführt ist.

Der erste Öffnungsbereich 37 weist einen Innendurchmesser auf, der im Wesentlichen dem Durchmesser des Halteabschnitts 18 des Befestigungszapfens 11 entspricht, bevorzugt aber geringfügig größer ist. Der zweite Öffnungsbereich 38 ist ein gekrümmt verlaufendes Langloch, das zum ersten Öffnungsbereich 37 hin offen ist.

Das Eingriffselement 15b ist um eine Drehachse 39, die parallel zur Zapfenlängsachse LA verläuft, drehbar. Im aufgesetzten Zustand der Rollenbahn 101, in dem der erste Formschluss hergestellt ist, ist die Drehachse 39 in Bezug auf die Zapfenlängsachse LA positionsversetzt. Konkret ist die Drehachse 39 in beide Querrichtungen in Bezug auf die Zapfenlängsachse LA von dieser versetzt.

Das Eingriffselement 15b ist zwischen einer ersten Drehstellung und einer zweiten Drehstellung an der Drehachse 39 drehbar, insbesondere schwenkbar. In der ersten Drehstellung, die in Fig. 9 zu sehen ist, korrespondiert der erste Öffnungsbereich 37 der bogenförmigen Öffnung 36 mit der Zapfenlängsachse LA derart, dass der Verbindungsbereich 12 und somit die Rollenbahn 101 von dem Befestigungszapfen 11 gelöst ist. In der ersten Drehstellung ist somit zwischen dem Befestigungszapfen 11 und dem Eingriffselement 15b kein Formschluss gebildet. Der Befestigungszapfen 11 durchragt den ersten Öffnungsbereich 37 der bogenförmigen Öffnung 36 freistehend.

In der zweiten Drehstellung, die in Fig. 11 zu sehen ist, ist das Eingriffselement 15b um die Drehachse 39, insbesondere im Uhrzeigersinn, verschwenkt, wobei der Führungsabschnitt 21 des Befestigungszapfens 11 in dem zweiten Öffnungsbereich 38 der bogenförmigen Öffnung 36 eingeführt ist und an einem Längsende des Öffnungsbereichs 38 anschlägt. In der zweiten Drehstellung überragt Halteabschnitt 18 das Eingriffselement 15b im an den zweiten Öffnungsbereich 38 angrenzenden Abschnitt des Eingriffselements 15b. Mit anderen Worten überdeckt der Halteabschnitt 18 das Eingriffselement 15b an dem zweiten Öffnungsbereich 38 derart, dass der Halteabschnitt 18 das Eingriffselement 15b in Zapfenlängsrichtung LA hält.

Da das Eingriffselement 15b zwischen dem Verbindungsbereich 12 der Rollenbahn 101 und dem Halteabschnitt 18 des Befestigungszapfens 11 angeordnet ist, ist der zweite Formschluss gebildet, der nun eine Bewegung der Rollenbahn 101 in Zapfenlängsachsrichtung, d.h. in Z-Richtung unterbindet. Die Rollenbahn 101 befindet sich nun in einem vollständig verriegelten Zustand.

Um die Rollenbahn 101 von den Befestigungszapfen 11 zu lösen, muss lediglich das Eingriffselement 15b von der zweiten in die erste Drehstellung verschwenkt werden. Die Rollenbahn 101 ist dann ganz einfach abnehmbar.

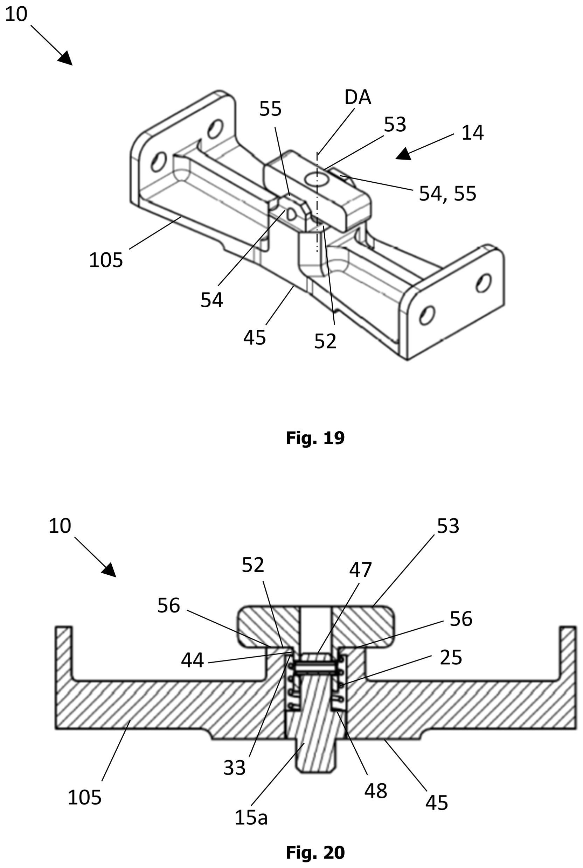

Ferner ist in den Fig. 9 bis 11 erkennbar, dass sich die Auflageplatte 26 von jener gemäß Fig. 1 bis 6 unterscheidet. Die Auflageplatte 26 weist im vorliegenden Fall nur ein Gegenstück 16 auf. Möglich ist auch, dass diese Auflageplatte 26 bei dem Schnellanschlusssystem 10 gemäß Fig. 1 bis 8 zum Einsatz kommen kann. Gleiches gilt für die Platte 26 gemäß Fig. 1 bis 6, die alternativ bei dem Schnellanschlusssystem 10 gemäß Fig. 9 bis 11 einsetzbar ist. Die Ausgestaltung bzw. Ausführung der Auflageplatte 26 mit einem oder zwei Gegenstücken 16 ist abhängig von den Anforderungen der eingesetzten Komponente(n) und hängt insbesondere davon ab, an welcher Position, insbesondere in X-Richtung, bspw. eine Rollenbahntrennstelle vorgesehen ist. Bei einer Rollenbahntrennstelle kommt vorzugsweise eine Auflageplatte 26 mit zwei, im Bereich innerhalb einer Rollenbahn 101 befindlichen Gegenstücken 16 zum Einsatz. Dies betrifft die Ausführungen des Schnellanschlusssystems 10 mit einem Verriegelungsmechanismus 14 gemäß Fig. 1 bis 6 sowie gemäß Fig. 19 bis 22. Es auch möglich, dass bei einer Rollenbahntrennstelle eine Auflageplatte 26 mit nur einem, im Bereich innerhalb einer Rollenbahn 101 befindlichen Gegenstück 16 zum Einsatz zum Einsatz kommen kann. Dies betrifft die Ausführung des Schnellanschlusssystems 10 mit einem Verriegelungsmechanismus 14 gemäß Fig. 9 bis 11. Andere Ausgestaltungen und Kombination von Auflageplatten 26 an Trennstellen sind möglich.

Die Fig. 12 bis 14 zeigen ein Schnellanschlusssystem 10 in einer weiteren bevorzugten Ausführungsform, wobei anstatt einer Rollenbahn 101, wie bei den Ausführungsbeispielen gemäß Fig. 1 bis 11 vorgesehen, eine Abdeckung 102 mit den Querträgern 107 über mehrere des Schnellanschlusssystems 10 lösbar verbunden ist. In den Fig. 12 und 13 ist die Abdeckung 102 der besseren Darstellung darunterliegender Teile transparent gezeigt.

In Fig. 13 ist gut erkennbar, dass die Auflageplatte 26 des Schnellanschlusssystems 10 mit der Auflageplatte 26 gemäß Fig. 1 bis 6 identisch ist. Auch die Befestigungszapfen 11 sind mit den Befestigungszapfen 11 gemäß Fig. 1 bis 7 identisch. Alternativ oder zusätzlich können die Befestigungszapfen 11 gemäß Fig. 9 bis 11 eingesetzt werden. Die Abdeckung 102 ist mit allen beschriebenen Befestigungszapfen 11 kompatibel.

Die Abdeckung 102 ist länglich ausgebildet und weist mehrere Verbindungsbereiche 12 auf, die einer in Einbaulage untenliegenden Fläche der Abdeckung 107 entsprechen. Der jeweilige Verbindungsbereich 12 weist mehrere Durchgangsöffnungen 13 auf, die in Einbaulage oben abgedeckt sind. Mit anderen Worten sind die Durchgangsöffnungen 13 bei dem Verbindungsbereich 12 nicht als Durchbruch zu verstehen, sondern als Öffnung im Sinne eines Sacklochs. Dies hat den Vorteil, dass sich im eingebauten Zustand in den Durchgangsöffnungen kein Schmutz ansammeln sowie Beschädigungen vermieden werden. Im Folgenden werden diese lediglich als Öffnungen 13 bezeichnet. Die Öffnungen 13 weisen einen Innendurchmesser auf, der im Wesentlichen dem Durchmesser des Halteabschnitts 18 und bspw. dem Durchmesser des Einsitzabschnitts 29 entspricht, sollte der Einsitzabschnitt 29 über die Auflageplatte 26 überstehen. Durch Aufstecken der Abdeckung 102 mittels Aufnahme des über die Auflageplatte 26 überstehenden Teils der Befestigungszapfen 11 wird ein erster Formschluss gebildet, der eine Bewegung der Abdeckung 102 in beide Querrichtungen, d.h. in beide X- und Y-Richtungen, blockiert.

Bei dem Schnellanschlusssystem 10 gemäß Fig. 12 bis 14 weist der Verriegelungsmechanismus 14 ein Eingriffselements 15c auf, das scheibenförmig ausgebildet ist. Das Eingriffselement 15c weist eine abschnittsweise bogenförmige Außenkontur 31 auf. Das Eingriffselement 15c ist auf einer Unterseite der Abdeckung 102, die im eingebauten Zustand dem Frachtraum abgewandt ist, schwenkbar angeordnet. Das Eingriffselement 15c ist um eine Drehachse 39 drehbar, die, wenn der erste Formschluss gebildet ist, parallel zur Zapfenlängsachse LA verläuft. Im aufgesetzten Zustand der Abdeckung 102, in dem der erste Formschluss hergestellt ist, ist die Drehachse 39 in Bezug auf die Zapfenlängsachse LA positionsversetzt.

Das Eingriffselement 15c ist zwischen einer ersten Drehstellung und einer zweiten Drehstellung an der Drehachse 39 drehbar, insbesondere schwenkbar. In der ersten Drehstellung, die in Fig. 13 zu sehen ist, ist das Eingriffselement 15c mit seiner bogenförmigen Außenkontur 31 in dem zwischen der Nase 32 des Gegenstücks 16 und der Oberfläche des Querträgers 107 gebildeten Freiraum eingeschwenkt. Mit anderen Worten befindet sich die bogenförmige Außenkontur 31 des Eingriffselements 15c abschnittsweise unterhalb der Nase 32, sodass ein zweiter Formschluss gebildet ist, der ein Abheben der Abdeckung 102 unterbindet. Der zweite Formschluss blockiert also eine Bewegung der Abdeckung 102 in Zapfenlängsachsrichtung LA, d.h. in Z-Richtung. Die Abdeckung 102 befindet sich hier in einem vollständig verriegelten Zustand.

Um die Abdeckung 102 von den Befestigungszapfen 11 zu lösen, muss lediglich das Eingriffselement 15c von der zweiten in die erste Drehstellung verschwenkt werden. In der zweiten Drehstellung greift das Eingriffselement 15c in den Freiraum nicht ein. Die Abdeckung 102 ist dann ganz einfach abnehmbar.

Da die Abdeckung 102 mit ihrer Öffnungen 13 so ausgebildet ist, dass die Befestigungszapfen 11 gemäß beiden Ausführungsbeispielen aufnehmbar sind, kann ohne großen Aufwand eine Umrüstung zwischen einem Frachtraum mit Frachtsystemkomponenten, wie der vorstehend beschriebene Rollenbahn, oder einem Frachtraum in "Bulk-Konfiguration", d.h. mit flachem Boden, erfolgen. Die Abdeckung 102 kommt vorzugsweise bei einem Frachtraum in "Bulk-Konfiguration" zum Einsatz.

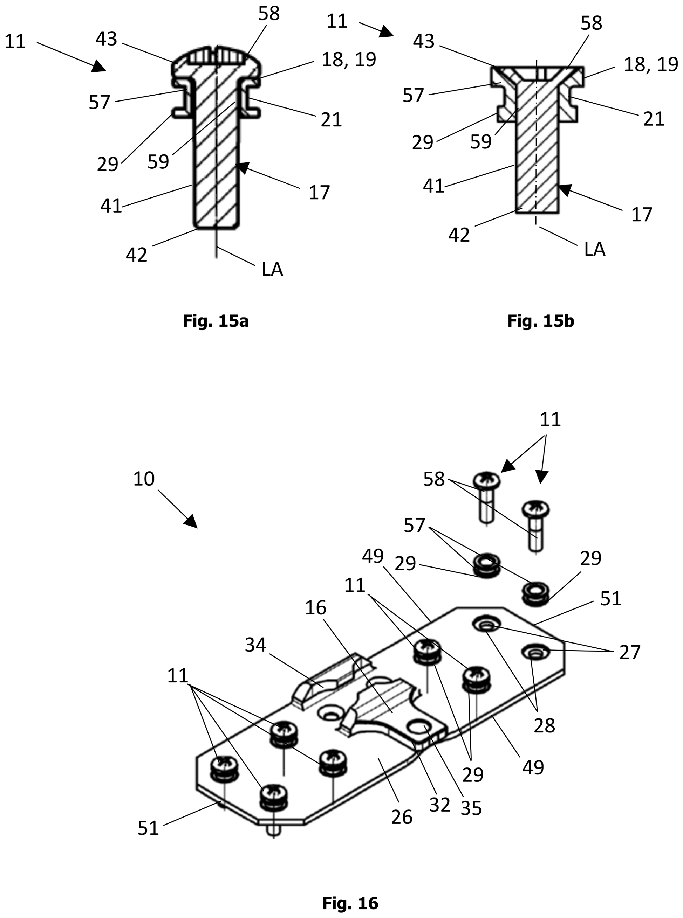

Gemäß Fig. 15a und 15b sind zwei weitere Ausführungsbeispiele eines oder mehrerer Befestigungszapfen 11 für eines oder mehrere des Schnellanschlusssystems 10 gemäß der erfindungsgemäßen Ausführungsbeispiele gezeigt.

Die Befestigungszapfen 11 gemäß Fig. 15a und 15b sind, im Unterschied zum Befestigungszapfen 11 gemäß Fig. 7, zweiteilig ausgebildet. Die Ausgestaltung der Befestigungszapfen 11 wird anhand Fig. 15a und 15b näher erläutert, wobei die nachfolgende Beschreibung es Befestigungszapfens 11 für alle zweiteiligen Befestigungszapfen 11 gilt. Unterschiede zwischen den beiden Befestigungszapfen 11 gemäß 15a und 15b werden gesondert hervorgehoben.

Der Befestigungszapfen 11 gemäß Fig. 15a,b weist einen länglichen Grundkörper 17 auf. Der längliche Grundkörper 17 umfasst einen Befestigungsabschnitt 41 mit einem Außengewinde, das sich entlang der Zapfenlängsachse LA erstreckt. Wie ersichtlich ist, läuft das Außengewinde auf ein erstes Längsende 42 des Befestigungszapfens 11 zu. Über den Befestigungsabschnitt 41 ist der Befestigungszapfen 11 mit dem Querträger 107 verbunden.

Der längliche Grundkörper 17 des Befestigungszapfens 11 gemäß Fig. 15a, 15b ist Teil einer Schraube. In Fig. 15a ist die Schraube 58 eine Linsenkopfschraube und in Fig. 15b ist die Schraube 58 eine Senkkopfschraube. Generell ist der Einsatz anderer Schraubenarten möglich.

Des Weiteren weist der Befestigungszapfen 11 gemäß Fig. 15a,b eine Hülse 57 mit einem Durchgang 59 auf. Die Hülse 57 ist auf die Schraube 58 aufsteckbar oder wie in Fig. 15a,b gezeigt aufgesteckt. Die Hülse 57 umfasst einen Halteabschnitt 18, der quer zur Zapfenlängsachse LA nach außen absteht. Der Halteabschnitt 18 dient dazu im befestigten Zustand der Rollenbahn 101 einen Verbindungsbereich 12 der Rollenbahn 101 in einer Richtung parallel zur Zapfenlängsachse LA unter Bildung eines Formschlusses festzusetzen. Diese Richtung wird auch als Zapfenlängsachsrichtung bezeichnet, die einer Z-Richtung entspricht. Bei dem vorliegenden Beispiel verläuft die Zapfenlängsachsrichtung parallel zur Z-Richtung des Flugzeugs. Der Halteabschnitt 18 ist an einem zweiten Längsende 43 des Befestigungszapfens 11 angeordnet. Konkret bildet der Halteabschnitt 18 einen Kragen 19, der in Bezug auf die Zapfenlängsachse LA an der Hülse 57 vollständig umlaufend ausgebildet ist.

Fig. 15a,b zeigen ferner einen an den Kragen 19 angrenzenden Führungsabschnitt 21 des Befestigungszapfens 11. Der Führungsabschnitt 21 ist entlang der Zapfenlängsachse LA neben dem Kragen 19 ausgebildet. Der Führungsabschnitt 21 dient zum Führen des Verbindungsbereichs 12 der Rollenbahn 101 bei einem Befestigungsvorgang der Rollenbahn 101. Der Führungsabschnitt 21 weist eine geringere Breite quer zur Zapfenlängsachse LA als der Kragen 19 auf.

An den Führungsabschnitt 21 angrenzend ist ein Einsitzabschnitt 29 des Befestigungszapfens 11 ausgebildet. Der Einsitzabschnitt 29 ragt quer zur Zapfenlängsachse LA über der Führungsabschnitt 21 hinaus. Der Einsitzabschnitt 29 bildet einen weiteren umlaufenden Kragen an der Hülse 57. Der Einsitzabschnitt 29 dient zum Einsitzen in eine Durchgangsöffnung bspw. einer Auflageplatte oder Bodenplatte.

Gemäß Fig. 15a weisen der Einsitzabschnitt 29 und der Halteabschnitt 18 dieselbe Breite quer zur Zapfenlängsachse LA auf. Konkret ragen der Einsitzabschnitt 29 und der Halteabschnitt 18 gleichweit über den Führungsabschnitt 21 quer zur Zapfenlängsachse LA über. Gemäß Fig. 15b hingegen ist der Halteabschnitt 18 im Vergleich zum Einsitzabschnitt 29 etwas größer in seiner Breite. Dies hat den Grund, dass die Senkkopfschraube in der Hülse 57 kopfseitig versenkt ist bzw. von dieser aufgenommen ist. Um dies zu ermöglichen, ist der Halteabschnitt 18 verbreitert, sodass die radial innenliegend Fase zur Aufnahme des Schraubenkopfes ausgebildet werden kann. Grundsätzlich besteht aber die Möglichkeit, den Halteabschnitt 18 so anzupassen, dass dieser eine Breite aufweist, die mite dem Einsitzabschnitt 29 übereinstimmt. Mit anderen Worten können der Halteabschnitt 18 und der Einsitzabschnitt 29 auch bei dem Befestigungszapfen 11 gemäß Fig. 15b dieselbe Breite aufweisen.

In Fig. 15a und 15b ist der Führungsabschnitt 21 zwischen dem Halteabschnitt 18 und dem Einsitzabschnitt 29 angeordnet. Konkret bildet der Führungsabschnitt 21 eine die Zapfenlängsachse LA umlaufende Nut in der Hülse 57, insbesondere dem Hülsenkörper.

Wie in Fig. 15a,b gut zu erkennen ist, ist der Befestigungszapfen 11 im Wesentlichen zylindrisch ausgebildet. Der Halteabschnitt 18 und der Führungsabschnitt 21 weisen jeweils einen Durchmesser auf, wobei der Durchmesser des Halteabschnitts 18 größer als der Durchmesser des Führungsabschnitts 21 ist. Ebenso weist der Einsitzabschnitt 29 einen Durchmesser auf, der größer als der Durchmesser des Führungsabschnitts 21 ist.

Fig. 16 zeigt die Auflageplatte 26 gemäß Fig. 9-11 in Kombination mit Befestigungszapfen 11, die dem Befestigungszapfen 11 gemäß Fig. 15a entsprechen. Möglich ist auch, dass die Befestigungszapfen 11 gemäß Fig. 15b bei der in Fig. 16 gezeigten zum Einsatz kommen. Eine Kombination von Befestigungszapfen 11 gemäß 15a und 15b sowie Fig. 7 ist möglich.

Die Durchgangsöffnungen 27 der Auflageplatte 26 umfassen, wie vorstehend beschrieben, einen Absatz 28, an dem die Hülsen 57 der Befestigungszapfen 11 mit ihren Einsitzabschnitten 29 aufliegen. Der Einsitzabschnitt 29 der Hülsen 57 der Befestigungszapfen 11 ist derart in der jeweiligen Durchgangsöffnung 27 formschlüssig aufgenommen, dass dieser bspw. mit einer obenliegenden Oberfläche der Auflageplatte 26 bündig abschließt. Dadurch liegen die Verbindungsbereiche 12 der Rollenbahn 101 auf der Auflageplatte 26 flächig auf. Bspw. ist möglich, dass der Einsitzabschnitt 29 der Hülsen 57 so ausgebildet ist, dass dieser im angeordneten Zustand in den Durchgangsöffnungen 27 von der obenliegenden Oberfläche der Auflageplatte 26 nach unten versetzt sind. Alternativ kann auch ein Überstand der Einsitzabschnitte 29 über die Oberfläche der Auflageplatte 26 möglich sein.

Bei der Montage werden die Hülsen 57 mit ihren Einsitzabschnitten 29 in die Durchgangsöffnungen 27 so eingesetzt, dass sie auf den Absätzen 28 aufliegen. Die Hülsen 57 sind dadurch formschlüssig in den Durchgangsöffnungen 27 aufgenommen und vorpositioniert. Dies ermöglicht eine schnelle und einfache Befestigung der Auflageplatte an einem Strukturteil 103 der Flugzeugstruktur 104. Die Schrauben 58 können anschließend in die Hülsen 57 eingeführt werden, wobei die Hülse 57 die Verschraubung der Schrauben 58 durch Führen und Halten vereinfacht.

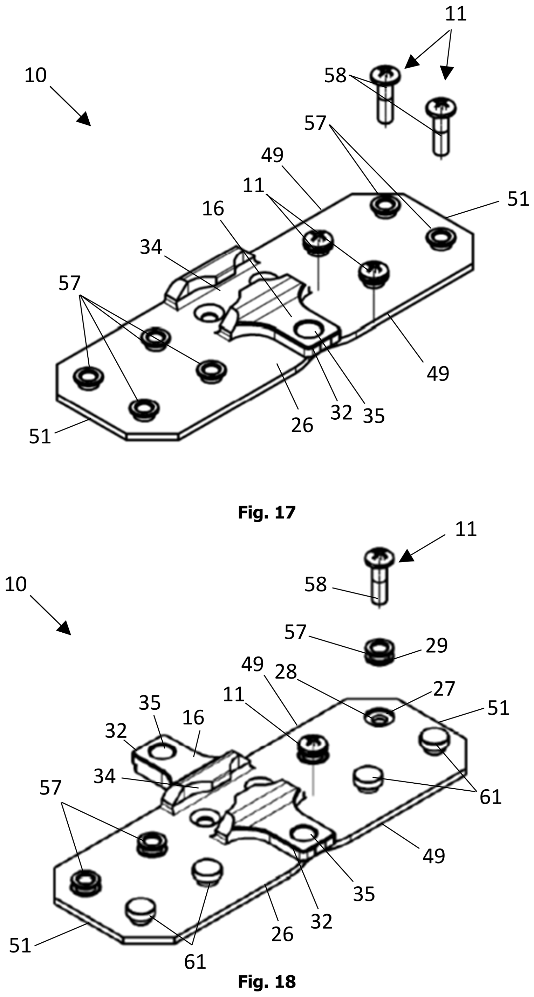

Fig. 17 zeigt eine weitere Ausführung einer Auflageplatte 26, wobei sich diese von der Auflageplatte 26 gemäß Fig. 16 dadurch unterscheidet, dass die Hülsen 57 nicht als separate Bauteile an der Auflageplatte 26 angeordnet sind, sondern einen integralen Bestandteil der Auflageplatte 26 bilden. Mit anderen Worten sind die Hülsen 57 mit der Auflageplatte 26 monolithisch ausgebildet. Wie in Fig. 17 zu erkennen ist, entfällt dadurch der Einsitzabschnitt 29 der Hülsen 57, da eine Vorpositionierung, wie in Fig. 16 gezeigt, nicht erforderlich ist. Dennoch fungieren die Hülsen 57 als Bestandteil der Befestigungszapfen 11.

Die in Fig. 18 gezeigte Auflageplatte 26 greift wiederum das Prinzip der Hülsen 57 als jeweils separates (von der Auflageplatte) getrenntes Bauteil auf, das in den Durchgangsöffnungen 27 der Auflageplatte 26 erst vorpositioniert wird und anschließend durch Einführen der Schrauben 58 mit einem Strukturteil 103 der Flugzeugstruktur 104 fest verschraubt wird.

In Fig. 18 ist zu erkennen, dass die Auflageplatte 26 im Wesentlichen der Auflageplatte 26 gemäß den Fig. 1-6 entspricht, mit dem einzigen Unterschied, dass an den Positionen der Durchgangsöffnungen 27 an einer der beiden Längsseiten 49 anstatt der Durchgangsöffnungen 27 integral ausgebildete Verriegelungsbolzen 61 vorgesehen sind. Die Verriegelungsbolzen 61 stehen an der Oberfläche der Auflageplatte 26 ab. Bevorzugt verlaufen diese parallel zur Zapfenlängsachsrichtung. Die Verriegelungsbolzen 61 sind pilzförmig ausgebildet und dienen, insbesondere ausschließlich, zur Positionierung einer Komponente, bspw. Abdeckung, und Übertragung von Downlasten, d.h. in Z-Richtung nach unten. Die Verriegelungsbolzen 61 sind vorzugsweise an der Auflageplatte 26 durch Fräsen hergestellt. Höhere Zug- oder Querlasten können und werden von den Verriegelungsbolzen 61 nicht übertragen werden, da diese solchen Belastungen schlichtweg nicht ausreichend standhalten würden.

In den Fig. 19 bis 22 ist eine weitere Ausführung eines Verriegelungsmechanismus 14 gezeigt, die bei dem Schnellanschlusssystem 10 nach einem oder mehreren der vorstehend beschriebenen erfindungsgemäßen Ausführungsbeispielen zum Einsatz kommen kann.

Der Verriegelungsmechanismus 14 weist ein Eingriffselement 15a, einen Drehgriff 53 und ein Federelement 25 auf. Das Eingriffselement 15a ist bolzenförmig ausgebildet. Mit anderen Worten ist das Eingriffselement 15a zylindrisch ausgebildet. Andere Formen sind möglich. Das Eingriffselement 15a ist in einem Halteteil 105 bspw. einer Rollenbahn 101 translatorisch, also längsverschiebbar, geführt. Das Halteteil 105 erstreckt sich quer zur Längsrichtung der Rollenbahn 101 zwischen den beiden gegenüberliegenden Rollenbahnprofilen 108, die der Einfachheit halber nicht dargestellt sind. Das Halteteil 105 ist ein Steg, der die beiden Rollenbahnprofile 108 verbindet.

Das Halteteil 105 weist eine Bohrung 44 auf, in der das Eingriffselement 15a längsverschiebbar geführt ist. Das Eingriffselement 15a kann an einer Unterseite 45 des Halteteils 105 aus der Bohrung 44 austreten und in diese wieder einfahren. Die Position des Eingriffselements 15a ist abhängig von der Stellung des Drehgriffs 53, mit dem das Eingriffselement 15a drehfest verbunden ist.

Der Drehgriff 53 ist auf einer Oberseite 52 des Halteteils 105 angeordnet. Das Eingriffselement 15a umfasst eine Mittelängsachse, die eine Drehachse DA des Drehgriffs 53 bildet. D.h., der Drehgriff 53 ist daher um die Drehachse DA drehbar. Der Drehgriff 53 ist im Wesentlichen T-förmig ausgebildet.

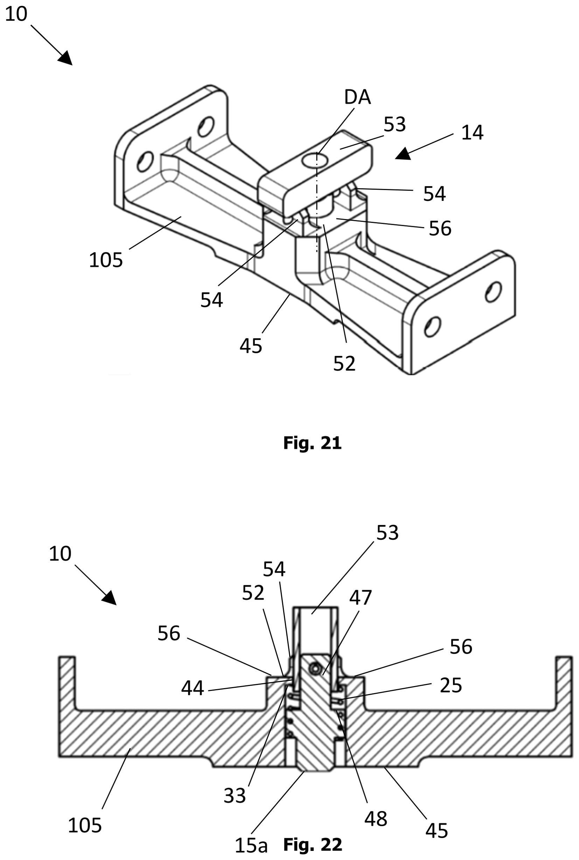

Wie in den Fig. 19 und 21 gut erkennbar ist, kann der Drehgriff 53 zwei Griffstellungen einnehmen. Die Griffstellungen entsprechen Drehstellungen des Drehgriffs bezogen auf die Drehachse DA. Die Drehachse DA ist bevorzugt vertikal verlaufen. Mit anderen Worten steht die Drehachse DA senkrecht zur Oberfläche der Auflageplatte 26.

Das Eingriffselement 15a weist einen Verbindungsstift 47 auf, der durch einen Durchbruch des Halteteils 105 zur Oberseite 52 hin geführt ist oder führbar ist. In der Bohrung 44 weist das Eingriffselement 15a einen weiteren Teilbereich auf, der eine größere Breite als der Verbindungsstift 47 umfasst. In Fig. 20 und 22 ist gut erkennbar, dass das Eingriffselement 15a einen Absatz 48 aufweist. Es ist auch gezeigt, dass sich das Federelement 25 einerseits an einer an den Durchbruch angrenzenden Innenfläche 33 der Bohrung 44 und andererseits an dem Absatz 48 des Eingriffselements 15a abstützt.

In einer ersten Griffstellung ist der Drehgriff 53 quer zum Halteteil 105 ausgerichtet. In der ersten Griffstellung ist der Drehgriff 53 in Bezug auf das Halteteil 105 um die Drehachse DA 90 Grad gedreht. In der zweiten Griffstellung ist der Drehgriff 53 mit dem Halteteil 105 richtungsübereinstimmend ausgerichtet. Mit anderen Worten befindet sich der Drehgriff 53 in der ersten Griffstellung, in der das Eingriffselement 15a angehoben ist, in einer 0-Stellung, insbesondere Ausgangsstellung, und in der zweiten Griffstellung, in der das Eingriffselement 15a abgesenkt ist, in einer in Bezug auf die 0-Stellung um 90 Grad gedrehte Stellung befinden. Der Drehwinkelbereich zum Anheben und Absenken des Eingriffselements 15a beträgt vorzugsweise 0 Grad bis 90 Grad (um die Drehachse DA).

Wie in Fig. 21 erkennbar, verläuft der Drehgriff 53 im Wesentlichen parallel zur Längsrichtung der Rollenbahn 101. In der ersten Griffstellung ist der breitere Teilbereich des Eingriffselements 15a vollständig in der Bohrung 44 aufgenommen, was in Fig. 22 gezeigt ist. In dieser Stellung ist das Federelement 25 zwischen dem Absatz 48 des Eingriffselements 15a und der Innenfläche 33 der Bohrung 44 komprimiert und bringt dadurch eine Federkraft auf, die das Eingriffselement 15a in Ausfahrrichtung vorspannt.

In der ersten Griffstellung steht das Eingriffselement 15a in Außereingriff mit einer Öffnung 35 eines Gegenstücks 16 (nicht dargestellt), mit dem der zweite Formschluss gebildet werden kann, um eine Bewegung der Rollenbahn 101 in der zweiten Querrichtung, konkret in Y-Richtung zu blockieren und so die Rollenbahn 101 ihrer Endposition zu verriegeln. In der zweiten Querrichtung bedeutet, dass der zweite Formschluss eine Bewegung der Rollenbahn 101 in beide Y-Richtungen blockiert.

Durch die Ausrichtung des Drehgriffs 53 in der ersten Griffstellung liegt der Drehgriff 53 mit einer dem Eingriffselement 15a zugewandten Unterfläche zwei an dem Eingriffselement 15a gegenüber angeordneten Fortsätzen 54, konkret auf deren Oberkanten 55 auf. Die Federkraft presst den Drehgriff 53 gegen die Oberkanten 55 der Fortsätze 54, sodass der Drehgriff 53, insbesondere kraftschlüssig, in der ersten Griffstellung gehalten wird.

Um den Drehgriff 53 von der ersten Griffstellung in die zweite Griffstellung zu überführen, kann dieser in einer von den Oberkanten wegführenden Richtung gegen die Federkraft des Federelements wirkend angehoben werden, sodass der Drehgriff 53 um die Drehachse DA frei drehbar ist. Durch anschließendes Drehen des Drehgriffs 53 um 90 Grad in Bezug auf die Drehachse DA wird das Eingriffselement 15a beim Überführen von der ersten in die zweite Griffstellung abgesenkt, wodurch der zweite Formschluss gebildet wird. Der Drehgriff 53 befindet sich in der zweiten Griffstellung abschnittsweise zwischen den beiden Fortsätzen 54, die dann den Drehgriff 53 in seiner Drehstellung fixieren. Die Fortsätze 54 wirken in der zweiten Griffstellung als zwei seitliche Anschläge, die eine Drehbewegung des Drehgriffs 53 unterbinden bzw. blockieren. In der zweiten Griffstellung liegt der Drehgriff 53 mit der Unterfläche auf einer in Bezug auf die Oberkanten 55 der Fortsätze 54 abgesetzten Fläche 56 des Halteteils 105 auf. Die erste Griffstellung ist in Fig. 21 und 22 zu sehen, wohingegen die zweite Griffstellung in Fig. 19 und 20 zu sehen ist.

Beim Überführen von der zweiten in die erste Griffstellung wird das Eingriffselement 15a angehoben, sodass der zweite Formschluss aufgehoben wird und die Rollenbahn 101 über die schlüssellochförmigen Durchgangsöffnungen 13 der Verbindungsbereiche 12 quer zur Längsrichtung der Rollenbahn 101 verschiebbar ist.

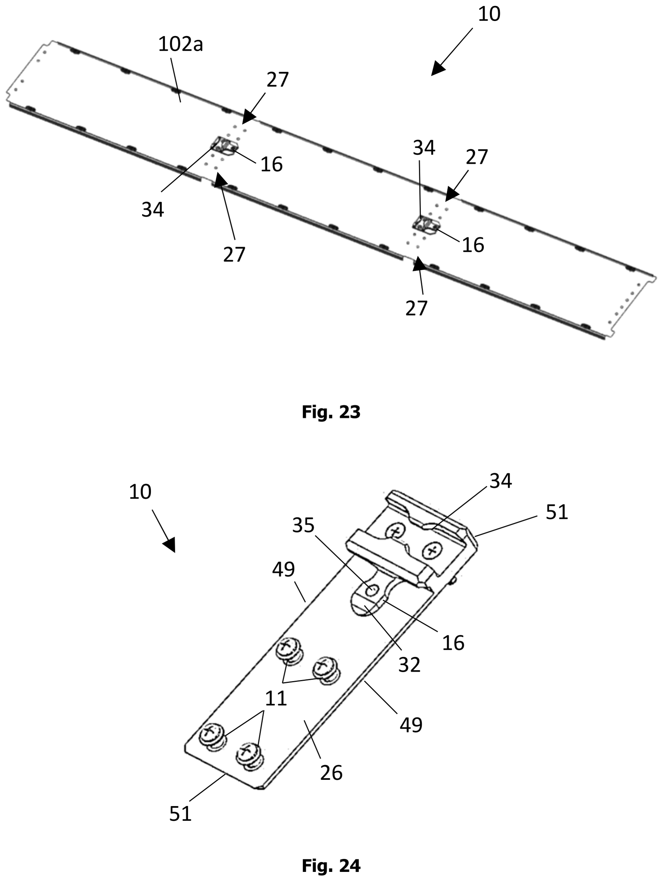

Fig. 23 zeigt eine Bodenplatte 102a, die eine vergrößerte Auflageplatte mit mehreren Gegenstücken 16 bildet. Die Bodenplatte 102a kann auch als Bodenabdeckung bezeichnet werden. Die Bodenplatte 102a weist an den Positionen der Strukturteile 103 der Flugzeugstruktur 104 ein Lochbild der Durchgangsöffnungen 27 der Auflageplatte 26 auf, um Befestigungszapfen 11 zu positionieren und eine Komponente, wie eine Rollenbahn 101, an diesen Strukturteilpositionen zu befestigen. Die Gegenstücke 16 (Verzurrpunkte) werden in diesem Fall mit der Bodenplatte 102a verschraubt. Diese können auch anders mit der Bodenplatte 102a fest verbunden werden. Im Falle der Anwendung der Bodenplatte 102a kann die Auflageplatte 26, wie vorstehend beschrieben entfallen.

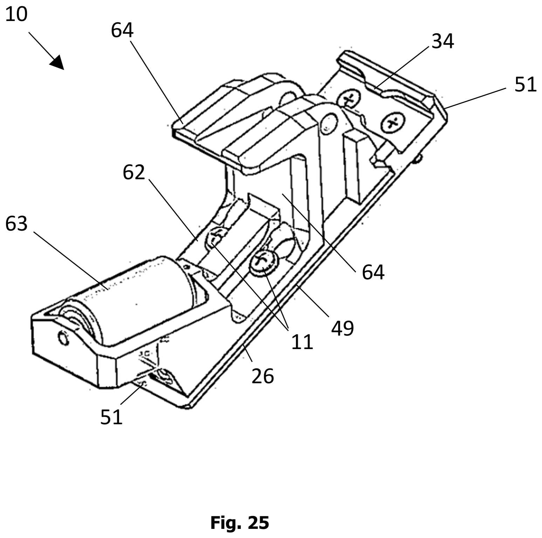

Fig. 24 zeigt eine Auflageplatte 26 mit bereits in die Durchgangsöffnungen 27 eingesetzten Befestigungszapfen 11, die zweiteilig sind, d.h. eine Schraube 58 und eine Hülse 57 umfassen. An einem Längsende der Auflageplatte 26 ist ein Gegenstück 16 vorgesehen. Fig. 25 zeigt einen Riegel 62, insbesondere YZ-Riegel, als Komponente 101. Der Riegel 62 ist über seinen Verbindungsbereich 12, der im Wesentlichen schlüssellochförmige Öffnungen wie bei dem Verbindungsbereich 12 gemäß Fig. 1 bis 8 aufweist, mit den Befestigungszapfen 11 unter Bildung eines ersten Formschlusses verbunden. Das gezeigte Schnellanschlusssystem 10 weist ferner einen federvorgespannten Griff (nicht dargestellt) auf, der ein Eingriffselement 15a von einer Verriegelungsstellung in eine Entriegelungsstellung und umgekehrt überführen kann. Der Verriegelungsmechanismus 14, der hier zum Einsatz kommt, funktioniert nach demselben Prinzip wie der Verriegelungsmechanismus 14 gemäß Fig. 1 bis 8 sowie Fig. 19 bis 22.

Aus Fig. 25 geht ferner hervor, dass der Riegel 62 eine Rolle 63 aufweist, um Frachtstücke, insbesondere Container bzw. Paletten, in einem Frachtraum 100 in X-Richtung des Flugzeugs zu bewegen. Der Riegel 62 selbst dient dazu Kräfte in Y-Richtung, insbesondere Querrichtung, die senkrecht zur X-Richtung steht, und in Z-Richtung, insbesondere Hochrichtung, die senkrecht zur X-/Y-Richtung steht, aufzunehmen und auf die Flugzeugstruktur 104 zu übertragen. Der Riegel 62 sichert im Gebrauch daher ein Frachtstück in Y- und Z-Richtung des Flugzeugs. Dazu weist der Riegel 62 eine Anschlagfläche 64 auf, die einen Anschlag für das Frachtstück in Y-Richtung bereitstellt. Ferner weist der Riegel 62 einen an die Anschlagfläche 64 angrenzende Nase 65 auf, die in Z-Richtung ein Überlappen bzw. Übergreifen eines Frachtstückabschnitts ermöglicht und so eine Befestigung in Z-Richtung bereitstellt.

Bspw. ist durch das Schnellanschlusssystem ein Wechsel von einem Frachtraum mit flachem Boden ("Bulk-Konfiguration) auf einen Frachtraum mit Frachtladesystem und umgekehrt realisierbar. Bei einem Konfigurationswechsel von einem Frachtraum mit Frachtladesystem ("CLS-Konfiguration) auf einen Frachtraum mit flachem Boden, insbesondere ohne Frachtladesystem, ("Bulk-Konfiguration") werden die Riegel 62 durch flache Abdeckungen ersetzt, die dasselbe Befestigungsprinzip mittels der Befestigungszapfen 11 und bspw. wenigstens einem Verriegelungsmechanismus nutzen. Diese Abdeckungen werden über die pilzförmige Gestalt der Befestigungszapfen 11 und ein federvorbelastetes Eingriffselement des Verriegelungsmechanismus befestigt. Das Eingriffselement ist in diesem Fall flach in der Abdeckung integriert und kann mittels Werkzeug, bspw. einem Schraubendreher, entriegelt werden.

An dieser Stelle wird darauf hingewiesen, dass die beschriebenen Rollenbahnen 101 mit einem oder mehreren Schnellanschlusssystemen 10 gemäß Fig. 1 bis 8 und/oder gemäß Fig. 9 bis 11 und/oder gemäß 15a bis 22 mit den Querträgern 107 verbunden werden können. Auch die Abdeckung 102 kann ein oder mehrere des Schnellanschlusssystems 10 gemäß Fig. 12 bis 14 und/oder 23 aufweisen. Besonders bevorzugt ist jede Komponente zumindest an zwei in Längsrichtung des Flugzeugs, d.h. in X-Richtung, beabstandeten Querträgern 107 lösbar befestigt.

Die unterschiedlichen Befestigungsversionen sind auch abhängig von den einzuleitenden Lasten. Das System nach Fig. 1-8 sowie Fig. 15-22 ist für die Übertragung von Frachtsystemlasten in X, Y und Z-Richtung ausgelegt, die Verriegelung Fig. 9-11 in erster Linie zur Befestigung von Abdeckungen, die möglichst flach und in Position gehalten werden sollen und hierbei X/Y Scherlasten und maximal Downlasten übertragen.

### Bezugszeichenliste

- 10: Schnellanschlusssystem
- 11: Befestigungszapfen
- 12: Verbindungsbereich
- 13: Durchgangsöffnung des Verbindungsbereichs
- 14: Verriegelungsmechanismus
- 15a-c: Eingriffselement
- 16: Gegenstück
- 17: länglicher Grundkörper
- 18: Halteabschnitt des Befestigungszapfens
- 19: Kragen
- 21: Führungsabschnitt des Befestigungszapfens
- 22: erster Öffnungsbereich der Durchgangsöffnung des Verbindungsbereichs
- 23: zweiter Öffnungsbereich der Durchgangsöffnung des Verbindungsbereichs
- 24: Hebel
- 25: Federelement
- 26: Auflageplatte
- 27: Durchgangsöffnung der Auflageplatte
- 28: Absatz
- 29: Einsitzabschnitt des Befestigungszapfens
- 31: bogenförmige Außenkontur
- 32: Nase der Gegenstücke
- 33: Innenfläche
- 34: Schienenabschnitt
- 35: Öffnung des Gegenstücks
- 36: bogenförmige Öffnung
- 37: erster Öffnungsbereich der bogenförmigen Öffnung des Eingriffselements
- 38: zweiter Öffnungsbereich der bogenförmigen Öffnung des Eingriffselements
- 39: Drehachse
- 41: Befestigungsabschnitt des Befestigungszapfens
- 42: erstes Längsende des Befestigungszapfens
- 43: zweites Längsende des Befestigungszapfens
- 44: Bohrung des Halteteils
- 45: Unterseite des Halteteils
- 46: Drehgelenk
- 47: Verbindungsstift
- 48: Absatz
- 49: Längsseiten der Auflageplatte
- 51: Breitseiten der Auflageplatte
- 52: Oberseite des Halteteils
- 53: Drehgriff
- 54: Fortsatz
- 55: Oberkante
- 56: abgesetzte Fläche
- 57: Hülse
- 58: Schraube
- 59: Durchgang
- 61: Verriegelungsbolzen
- 62: Riegel
- 63: Rolle
- 64: Anschlagfläche
- 65: Nase
- 100: Frachtraum
- 101: Frachtsystemkomponente, Rollenbahn
- 102: Abdeckung
- 103: Strukturteil
- 104: Flugzeugstruktur
- 105: Halteteil
- 106: Spanten
- 107: Querträger
- 108: Rollenbahnprofile
- LA: Zapfenlängsachse
- DA: Drehachse

## Patentansprüche

1. Schnellanschlusssystem (10) zum Befestigen und/oder Wechseln von Komponenten, insbesondere Frachtsystemkomponenten (101) und/oder Abdeckungen (102), eines Flugzeugfrachtraums (100) an wenigstens einem Strukturteil (103) einer Flugzeugstruktur (104), umfassend:
- wenigstens einen an dem Strukturteil (103) montierbaren Befestigungszapfen (11) mit einer Zapfenlängsachse (LA);
- wenigstens einen Verbindungsbereich (12), der an der Komponente angeordnet oder ausgebildet ist und wenigstens eine Durchgangsöffnung (13) aufweist, in der der Befestigungszapfen (11) unter Bildung eines ersten Formschlusses in Zapfenlängsachsrichtung und/oder quer zur Zapfenlängsachse (LA) zumindest abschnittsweise aufnehmbar oder aufgenommen ist; und
- wenigstens einen an der Komponente angeordneten Verriegelungsmechanismus (14) mit wenigstens einem Eingriffselement (15a-c), das an der Komponente derart beweglich gelagert ist, dass durch eine Translations- oder Rotationsbewegung des Eingriffselements (15a-c) mit dem Befestigungszapfen (11), dem Strukturteil (103) oder einem an dem Strukturteil (103) montierbaren Gegenstück (16) ein zweiter Formschluss bildbar oder gebildet ist, der eine Bewegung der Komponente in Zapfenlängsachsrichtung und/oder quer zur Zapfenlängsachse (LA) blockiert.

2. Schnellanschlusssystem (10) nach Anspruch 1,
**dadurch gekennzeichnet, dass**
der Befestigungszapfen (11) einen länglichen Grundkörper (17) mit wenigstens einem Halteabschnitt (18) aufweist, der quer zur Zapfenlängsachse (LA) an dem Grundkörper (17) absteht, um den ersten Formschluss mit dem Verbindungsbereich (12) zu bilden oder den zweiten Formschluss mit dem Eingriffselement (15b) zu bilden, wobei der Halteabschnitt (18) des Befestigungszapfens (11) vorzugsweise wenigstens einen Kragen (19) umfasst, der in Bezug auf die Zapfenlängsachse (LA) zumindest teilweise, insbesondere vollständig, umlaufend ausgebildet ist.

3. Schnellanschlusssystem (10) nach Anspruch 2,
**dadurch gekennzeichnet, dass**
der Grundkörper (17) einen an den Halteabschnitt (18) angrenzenden, insbesondere darunterliegenden, Führungsabschnitt (21) aufweist, der eine geringere Breite als der Halteabschnitt (18) aufweist, wobei vorzugsweise der Halteabschnitt (18) und der Führungsabschnitt (21) jeweils einen Durchmesser aufweisen, wobei der Durchmesser des Halteabschnitts (18) größer als der Durchmesser des Führungsabschnitts (21) ist.

4. Schnellanschlusssystem (10) nach Anspruch 2 oder 3,
**dadurch gekennzeichnet, dass**
die Durchgangsöffnung (13) des Verbindungsbereichs (12) dazu angepasst ist, den Halteabschnitt (18) und/oder zumindest einen Teilbereich des Grundkörpers (17) unter Bildung des ersten Formschlusses aufzunehmen und/oder die Durchgangsöffnung (13) des Verbindungsbereichs (12) einen ersten Öffnungsbereich (22) und einen angrenzenden zweiten Öffnungsbereich (23) aufweist, die ineinander übergehen, wobei der erste Öffnungsbereich (22) so ausgebildet ist, dass der Halteabschnitt (18) des Befestigungszapfens (11) hindurchführbar ist und der zweite Öffnungsbereich (23) so ausgebildet ist, dass der Halteabschnitt (18) den zweiten Öffnungsbereich (23) nach außen hin überragt.

5. Schnellanschlusssystem (10) nach einem der vorhergehenden Ansprüche,
**dadurch gekennzeichnet, dass**
das Eingriffselement (15a) dazu angepasst ist, in eine Öffnung des Strukturteils (103) und/oder eine Öffnung (35) eines an dem Strukturteil (103) montierbaren Gegenstücks (16) unter Bildung des zweiten Formschlusses einzugreifen, wobei das Eingriffselement (15a) vorzugsweise bolzenförmig ausgebildet ist und in einem Halteteil (105) der Komponente translatorisch verschiebbar geführt ist.

6. Schnellanschlusssystem (10) nach einem der vorhergehenden Ansprüche,
**dadurch gekennzeichnet, dass**
der Verriegelungsmechanismus (14) einen Hebel (24) umfasst, der mit dem Eingriffselement (15a) drehbar verbunden ist, wobei der Hebel (24) in einer ersten Hebelstellung das Eingriffselement (15a) zur Auflösung des zweiten Formschlusses, insbesondere quer zur Zapfenlängsachsrichtung, anhebt und in einer zweiten Hebelstellung zur Bildung des zweiten Formschlusses, insbesondere quer zur Zapfenlängsachsrichtung, absenkt.

7. Schnellanschlusssystem (10) nach einem der Ansprüche 1 bis 6,
**dadurch gekennzeichnet, dass**
der Verriegelungsmechanismus (14) einen Drehgriff (53) umfasst, der mit dem Eingriffselement (15a), insbesondere drehfest, verbunden ist, wobei der Drehgriff (53) in einer ersten Griffstellung das Eingriffselement (15a) zur Auflösung des zweiten Formschlusses, insbesondere quer zur Zapfenlängsachsrichtung, anhebt und in einer zweiten Griffstellung zur Bildung des zweiten Formschlusses, insbesondere quer zur Zapfenlängsachsrichtung, absenkt, wobei der Verriegelungsmechanismus (14) vorzugsweise wenigstens einen Fortsatz (54) mit einer, insbesondere in Zapfenlängsachsrichtung, abstehenden Oberkante (55) aufweist, der den Drehgriff (53) in seiner ersten Griffstellung hält, und vorzugsweise wenigstens eine von der Oberkante (55) abgesetzte Fläche (56) aufweist, auf der der Drehgriff (53) in seiner zweiten Griffstellung aufliegt.

8. Schnellanschlusssystem (10) nach Anspruch 6 oder 7,
**dadurch gekennzeichnet, dass**
der Verriegelungsmechanismus (14) wenigstens ein Federelement (25) umfasst, das das Eingriffselement (15a) in einer von dem Hebel (24) bzw. von dem Drehgriff (53) abgewandten Richtung vorspannt, wenn sich der Hebel (24) in seiner ersten Hebelstellung bzw. der Drehgriff (53) in seiner ersten Griffstellung befindet und/oder der Verriegelungsmechanismus (14) wenigstens eine drehbeweglich gelagerte Kulisse aufweist, die mit dem Eingriffselement (15a) derart gekoppelt ist, dass sie durch eine Drehbewegung ein Anheben oder Absenken des Eingriffselements (15a) bewirkt.

9. Schnellanschlusssystem (10) nach einem der vorhergehenden Ansprüche,
**dadurch gekennzeichnet, dass**
wenigstens eine Auflageplatte (26) und/oder wenigstens eine Bodenplatte (102a) zur Auflage der Komponente vorgesehen ist, die wenigstens eine Durchgangsöffnung (27) für den Befestigungszapfen (11) umfasst/umfassen, wobei vorzugsweise die Durchgangsöffnung (27) der Auflageplatte (26) bzw. der Bodenplatte (102a) wenigstens einen Absatz (28) und der Befestigungszapfen (11) wenigstens einen Einsitzabschnitt (29) aufweist, der auf dem Absatz (28) aufliegt und in der Durchgangsöffnung (27) der Auflageplatte (26) bzw. der Bodenplatte (102a) formschlüssig aufgenommen ist.

10. Schnellanschlusssystem (10) nach Anspruch 9,
**dadurch gekennzeichnet, dass**
das Gegenstück (16) zum Eingreifen des Eingriffselements (15a) Teil der Auflageplatte (26) ist, an der Bodenplatte (102a) befestigt ist oder in der Nähe des Befestigungszapfens (11), insbesondere der mehreren Befestigungszapfen (11), angeordnet ist und/oder die Auflageplatte (26) bzw. die Bodenplatte (102a) wenigstens einen Schienenabschnitt (34), insbesondere Lochschienenabschnitt, zur Bildung eines Verzurrpunktes bzw. Positionierfittings aufweist, der im Bereich der Öffnung (35) des Gegenstücks (16) angeordnet ist.

11. Schnellanschlusssystem (10) nach einem der Ansprüche 2 bis 10, insbesondere nach Anspruch 3,
**dadurch gekennzeichnet, dass**
der Halteabschnitt (18) und/oder der Führungsabschnitt (21) des Befestigungszapfens (11) mit dessen Grundkörper (17) einteilig ausgebildet sind oder der Halteabschnitt (18) und/oder der Führungsabschnitt (21) des Befestigungszapfens (11) Teil einer von dem Grundkörper (17) getrennten Hülse (56) sind.

12. Schnellanschlusssystem (10) nach Anspruch 11,
**dadurch gekennzeichnet, dass**
die Hülse (56) ein eigenständiges Bauteil ist, die auf dem Grundkörper (17) des Befestigungszapfens (11) anordenbar oder angeordnet ist, oder die Hülse (56) ein integraler Bestandteil der Auflageplatte (26) ist, wobei die Durchgangsöffnung (27) der Auflageplatte (26) durch die Hülse (56) verläuft.

13. Schnellanschlusssystem (10) nach einem der Ansprüche 2 bis 12,
**dadurch gekennzeichnet, dass**
das Eingriffselement (15b) zwischen dem Verbindungsbereich (12) und dem Halteabschnitt (18) angeordnet und dazu angepasst ist, den Halteabschnitt (18) durch eine Rotationsbewegung unter Bildung des zweiten Formschlusses zu hintergreifen und/oder das Eingriffselement (15b) scheibenförmig ausgebildet ist und eine bogenförmige Öffnung (36) aufweist, die einen ersten Öffnungsbereich (37) umfasst, der größer als eine Außenkontur des Halteabschnitts (18) des Befestigungszapfens (11) ist, und die einen zweiten angrenzenden Öffnungsbereich (38) aufweist, der kleiner als die Außenkontur des Halteabschnitts (18) ist.

14. Schnellanschlusssystem (10) nach einem der Ansprüche 2 bis 13,
**dadurch gekennzeichnet, dass**
das Eingriffselement (15b) um eine Drehachse (39), die parallel zur Zapfenlängsachse (LA) verläuft, drehbar ist, wobei das Eingriffselement (15b) den Befestigungszapfen (11) in einer ersten Drehstellung zur Auflösung des zweiten Formschlusses, insbesondere in Zapfenlängsachsrichtung, freigibt und in einer zweiten Drehstellung zur Bildung des zweiten Formschlusses, insbesondere in Zapfenlängsachsrichtung, formschlüssig hält.

15. Schnellanschlusssystem (10) nach einem der vorhergehenden Ansprüche,
**dadurch gekennzeichnet, dass**
die Komponente eine Rollenbahn (101) oder eine Abdeckung (102) ist, wobei die Rollenbahn (101) vorzugsweise mehrere drehbar gelagerte Rollen und wenigstens einen Riegel und/oder eine PDU aufweist.

16. Frachtraum (100) für ein Flugzeug mit wenigstens zwei Spanten (106), die in Längsrichtung des Frachtraums (100) einen Abstand voneinander aufweisen, und wenigstens zwei Strukturteile (103) bildenden Querträgern (107), wobei je einer der Querträger (107) an einer der Spanten (106) quer zur Längsrichtung des Frachtraums (100) verläuft, und wenigstens einer Komponente, insbesondere Frachtsystemkomponente und/oder Abdeckung (102), wobei wenigstens ein Schnellanschlusssystem (10) nach einem der vorhergehenden Ansprüche vorgesehen ist, durch die die Komponente mit zumindest einem der Querträger (107) lösbar verbunden ist.

17. Flugzeug mit einem Frachtraum (100) nach Anspruch 16.

18. Verfahren zum Umkonfigurieren eines Frachtraums (100) nach Anspruch 16 unter Verwendung wenigstens eines Schnellanschlusssystems (10) nach einem der Ansprüche 1 bis 15, wobei sich die Komponente in einem mit dem Strukturteil (103) verriegelten Zustand befindet, wobei bei dem Verfahren
- das Eingriffselement (15a) von dem Gegenstück (16) oder dem Strukturteil (103) des Flugzeugs durch eine Translations- oder Rotationsbewegung derart weg bewegt wird, dass es zum Auflösen des zweiten Formschlusses in eine Entriegelungsstellung bewegt wird;
- die Komponente durch Verschieben des Verbindungsbereichs (12) in eine Freigabestellung bewegt wird und der Verbindungsbereich (12) von dem Befestigungszapfen (11) abgenommen wird; und
- eine weitere Komponente auf den wenigstens einen Befestigungszapfen (11) aufgesetzt wird und das Eingriffselement (15c) des Verriegelungsmechanismus (14) der weiteren Komponente mit dem Gegenstück (16) oder dem Strukturteil (103) des Flugzeugs durch eine Rotationsbewegung des Eingriffselements (15c) formschlüssig befestigt wird.

19. Verfahren zum Umkonfigurieren eines Frachtraums (100) nach Anspruch 16 unter Verwendung wenigstens eines Schnellanschlusssystems (10) nach einem der Ansprüche 1 bis 15, wobei sich die Komponente in einem mit dem Strukturteil (103) verriegelten Zustand befindet, wobei bei dem Verfahren
- das Eingriffselement (15b) zu dem Befestigungszapfen (11) durch eine Rotationsbewegung derart relativ bewegt wird, dass es zum Auflösen des zweiten Formschlusses in eine Entriegelungsstellung bewegt wird und sich die Komponente so in einer Freigabestellung befindet;
- der Verbindungsbereich (12) der Komponente von dem Befestigungszapfen (11) abgenommen wird; und
- eine weitere Komponente auf den wenigstens einen Befestigungszapfen (11) aufgesetzt wird und das Eingriffselement (15c) des Verriegelungsmechanismus (14) der weiteren Komponente mit dem Gegenstück (16) oder dem Strukturteil (103) des Flugzeugs durch eine Rotationsbewegung des Eingriffselements (15c) formschlüssig befestigt wird.
